(19) Europäisches Patentamt
European Patent Office
Office européen des brevets

(11) EP 2 256 165 A1

(12) **EUROPEAN PATENT APPLICATION**
published in accordance with Art. 153(4) EPC

(43) Date of publication:
**01.12.2010 Bulletin 2010/48**

(21) Application number: **09708348.9**

(22) Date of filing: **03.02.2009**

(51) Int Cl.:
***C08L 67/04*** (2006.01) ***C08K 3/32*** (2006.01)
***C08K 5/29*** (2006.01) ***C08K 5/3415*** (2006.01)
***C08L 67/02*** (2006.01) ***C08L 77/00*** (2006.01)
***C08L 101/16*** (2006.01)

(86) International application number:
**PCT/JP2009/052122**

(87) International publication number:
**WO 2009/099225 (13.08.2009 Gazette 2009/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **04.02.2008 JP 2008024236**
**04.02.2008 JP 2008024237**

(71) Applicants:
- **Teijin Limited**
  **Osaka-shi, Osaka 541-0054 (JP)**
- **Teijin Chemicals, Ltd.**
  **Chiyoda-ku**
  **Tokyo 100-0013 (JP)**

(72) Inventors:
- **TOYOHARA, Kiyotsuna**
  **Iwakuni-shi**
  **Yamaguchi 740-0014 (JP)**
- **ODA, Jitsuo**
  **Tokyo 100-0013 (JP)**

(74) Representative: **Hallybone, Huw George**
**Carpmaels & Ransford**
**One Southampton Row**
**London**
**WC1B 5HA (GB)**

(54) **RESIN COMPOSITION AND MOLDED ARTICLE**

(57) A resin composition comprising an aromatic polyester having a butylene terephthalate skeleton as the main constituent unit (component A), polylactic acid comprising poly(L-lactic acid) and poly(D-lactic acid) (component B), and a modifier (component C), wherein the resin composition has (i) a crystal melting peak of stereocomplex-phase polylactic acid at 190˚C or higher in differential scanning calorimeter measurement, (ii) a biomass ratio of not less than 50 %, (iii) a notched Izod impact strength of 4 to 15 kJ/$m^2$ and (iv) a flexural modulus of 2.5 to 6 GPa.

The resin composition provides a molded article having excellent impact resistance and stiffness. The resin composition has a biomass ratio of not less than 50 %. The resin composition has a low moisture absorptivity, hydrolysis resistance and high-speed moldability. The resin composition provides a molded article having excellent heat resistance.

EP 2 256 165 A1

## Description

TECHNICAL FIELD

The present invention relates to a resin composition which comprises an aromatic polyester (component A), polylactic acid (component B) and a modifier (component C), has a biomass ratio of not less than 50 % and is excellent in impact resistance, stiffness, low hygroscopicity, hydrolysis resistance and high-speed moldability.

BACKGROUND ART

Since engineering plastics such as polybutylene terephthalate (may be abbreviated as PBT hereinafter) have excellent moldability, mechanical strength, heat resistance, chemical resistance and aroma retention, they are widely used as materials for auto parts, electric and electronic equipment parts and precision equipment parts. However, the engineering plastics consume a large amount of an oil resource and become waste after use, thereby destroying the scenery and exerting a bad influence upon an ecological system. When they are burnt, they increase the amount of carbon dioxide in the air, whereby their influence upon global warming is strongly concerned.
Under the above background, expectations for biodegradable plastics obtained from non-oil resources are growing, and the indication of a biomass ratio which shows the use ratio of a bio-based raw material in plastics is now under study.
Use of polylactic acid which is a bio-based polymer is expected because L-lactic acid which is a raw material of the polylactic acid is now produced in large quantities at a low cost by a fermentation process and has an excellent feature such as high stiffness. However, when polylactic acid is compared with conventional polymers obtained from oil resources, it still has some problems to be solved for its practical use. The improvement of moldability, heat resistance, chemical resistance, impact resistance and hydrolysis resistance in particular is desired.
Although conventional polylactic acid is obtained mainly from L-lactic acid, stereocomplex polylactic acid obtained from D-lactic acid as one of its raw materials has been developed (refer to Non-Patent Document 1, for example). The stereocomplex polylactic acid is a crystalline resin having a much higher melting point than that of conventional poly(L-lactic acid) and is expected to have higher characteristic properties than those of poly (L-lactic acid). However, a technology for developing a stereocomplex phase at a high repeatability is not completed yet.
Under the above situation, attempts are being made to develop a resin material having the characteristic properties of both an engineering plastic and a bio-based polymer by mixing them together.
For example, a structural material obtained by mixing together polyethylene terephthalate and an aliphatic polyester is proposed (refer to Patent Document 1). According to this proposal, the contained ester bond can be decomposed at the same time when the aliphatic polyester contained in the structural material is decomposed by heating or by adding a solvent, thereby making it possible to obtain a molded article which can be easily disposed of after use. However, this resin composition comprising polyethylene terephthalate and an aliphatic polyester has low heat stability and moldability at the time of melt molding and is not put to practical use yet as an engineering plastic having high impact resistance.
To improve the moldability of a resin composition comprising PBT and polylactic acid, it is proposed that the resin composition should be molded under the condition that PBT is contained in an amount of not more than 15 wt% and not molten to increase the heat deformation temperature of a molded article so as to improve moldability (Patent Document 2). However, in this proposal, the resin composition is still unsatisfactory in terms of heat deformation temperature and moldability for its practical use. Impact strength required for engineering plastics is not higher than even the impact strength of PBT alone.
A method of improving moldability by adding a polyacetal in addition to PBT and polylactic acid is disclosed (Patent Document 3). However, as the glass transition temperature drops in this method, heat resistance may lower. Impact resistance is also unsatisfactory.
The above various proposals have been made on a homopolymer of poly(L-lactic acid) or poly(D-lactic acid) (may be referred to as "lactic acid homopolymer" hereinafter) which is stably produced as polylactic acid. However, a resin composition comprising PBT and stereocomplex polylactic acid is not studied yet. Under the current situation in which a method of forming stereocomplex-phase polylactic acid stably is not established yet, there is no proposal for a resin composition comprising PBT and polylactic acid which fully develops a stereocomplex phase.
Under the above situation, a proposal for a resin composition comprising PBT and polylactic acid which fully develops a stereocomplex phase and having excellent moldability, hydrolysis resistance, impact resistance and stiffness is awaited.

(Non-Patent Document 1) Macromolecules 1987, 20, 904-906

(continued)

| | |
|---|---|
| (Patent Document 1) | JP-A 8-104797 |
| (Patent Document 2) | JP-A 2006-36818 |
| (patent Document 3) | JP-A 2003-342459 |

DISCLOSURE OF THE INVENTION

It is an object of the present invention to provide a resin composition which comprises PBT and stereocomplex polylactic acid and provides a molded article having excellent impact resistance and stiffness. It is another object of the present invention to provide a resin composition which has a biomass ratio of not less than 50 %. It is still another object of the present invention to provide a resin composition which provides a molded article having low moisture absorptivity and excellent hydrolysis resistance. It is a further object of the present invention to provide a resin composition which provides a molded article having excellent heat resistance. It is a still further object of the present invention to provide a resin composition having high-speed moldability.

The inventors of the present invention have conducted intensive studies to attain the above objects and have accomplished the present invention. That is, the present invention includes the following.

(1) A resin composition comprising an aromatic polyester having a butylene terephthalate skeleton as the main constituent unit (component A), polylactic acid comprising poly(L-lactic acid) and poly(D-lactic acid) (component B), and a modifier (component C), wherein
the resin composition has (i) a crystal melting peak of stereocomplex-phase polylactic acid at 190°C or higher in differential scanning calorimeter measurement, (ii) a biomass ratio of not less than 50 %, (iii) a notched Izod impact strength of 4 to 15 kJ/m$^2$ and (iv) a flexural modulus of 2.5 to 6 GPa.

(2) The resin composition according to the above paragraph 1 which has a stereo crystallization ratio (Cr) of not less than 50 % and a stereo crystal rate (S) of not less than 80 % (the stereo crystallization ratio (Cr) is represented by the following equation (1):

$$Cr\ (\%) = [\Sigma I_{SCi}/(\Sigma I_{SCi} + I_{HM})] \times 100 \qquad (1)$$

$$\Sigma I_{SCi} = I_{SC1} + I_{SC2} + I_{SC3}$$

($I_{sci}$ (i = 1 to 3) is the integral intensity of a diffraction peak at 2θ = 12.0°, 20.7° or 24.0°, $\Sigma I_{sci}$ is the total of integral intensities of diffraction peaks derived from a stereocomplex crystal, and $I_{HM}$ is the integral intensity of a diffraction peak derived from a homocrystal in wide-angle X-ray diffraction (XRD) measurement), and the stereo crystal rate (S) is represented by the following equation (2) from the melting enthalpy of a polylactic acid crystal in DSC measurement:

S (%) =$[(\Delta Hms/\Delta Hms^0)/(\Delta Hmh/\Delta Hmh^0 + \Delta Hms/\Delta Hms^0)] \times 100$ (2) ($\Delta Hms^0$ = 203.4 J/g, $\Delta Hmh^0$ = 142 J/g, ΔHms = melting enthalpy of a stereocomplex-phase polylactic acid crystal, and ΔHmh = melting enthalpy of a polylactic acid homo-phase crystal))

(3) The resin composition according to the above paragraph 2 which has a stereo crystallization ratio (Cr) of not less than 50 % and a stereo crystal rate (S) of not less than 95 %.

(4) The resin composition according to the above paragraph 1, wherein the modifier (component C) is at least one resin selected from the group consisting of copolyester, copolyethylene and core-shell type resin having silicone/acrylic or acrylic rubber and is contained in an amount of 1 to 30 parts by weight based on 100 parts by weight of the total of the components A and B.

(5) The resin composition according to the above paragraph 4 which comprises 50 parts or more by weight and less than 100 parts by weight of the component B and 1 to 30 parts by weight of the component C based on 100 parts by weight of the total of the components A and B.

(6) The resin composition according to the above paragraph 4 which has a carbodiimide compound (component D) content of 0.001 to 5 wt% based on the total of the components A, B and C, a lactide content of 0 to 700 wtppm and a carboxyl group concentration of 0 to 30 eq/ton.

(7) The resin composition according to the above paragraph 4 which has a notched Izod impact strength of 4 to 7.5

$kJ/m^2$.
(8) The resin composition according to the above paragraph 4 which has a moisture absorptivity of less than 1 wt%.
(9) The resin composition according to the above paragraph 1, wherein the modifier (component C) is a polyamide elastomer.
(10) The resin composition according to the above paragraph 9 which has a component B content of 50 parts or more by weight and less than 100 parts by weight and a component C content of 0. 1 to 10 parts by weight based on 100 parts by weight of the total of the components A and B.
(11) The resin composition according to the above paragraph 9 which has a carbodiimide compound (component D) content of 0.001 to 5 wt%, a lactide content of 0 to 700 wtppm and a carboxyl group concentration of 0 to 30 eq/ton based on the total of the components A, B and C.
(12) The resin composition according to the above paragraph 1, wherein the aromatic polyester (component A) has a carboxyl group concentration of 0 to 60 eq/ton and an intrinsic viscosity of 0.7 to 1.8.
(13) The resin composition according to the above paragraph 1, wherein the polylactic acid (component B) has a stereo crystallization ratio (Cr) of not less than 50 % and a stereo crystal rate (S) of not less than 80 %.
(14) The resin composition according to the above paragraph 1, wherein the polylactic acid (component B) contains 0.001 to 5 wt% of a carbodiimide compound (component D) and has a carboxyl group concentration of not more than 10 eq/ton and a lactide content of 0 to 700 wtppm.
(15) The resin composition according to the above paragraph 1 which comprises 0.01 to 5 parts by weight of an ester exchange inhibitor (component E) based on 100 parts by weight of the total of the components A and B.
(16) The resin composition according to the above paragraph 1 which comprises 0.01 to 10 parts by weight of a crystal nucleating agent (component F) based on 100 parts by weight of the total of the components A and B.
(17) A molded article obtained from the resin composition of the above paragraph 1.

The present invention includes a method for improving the characteristic properties such as impact resistance, stiffness, moisture absorptivity, hydrolysis resistance and heat resistance of a molded article by using the resin composition of the above paragraph 1 as a molding material. The present invention also includes the use of the resin composition of the above paragraph 1 as a molding material.

BEST MODE FOR CARRYING OUT THE INVENTION

The present invention will be described in detail hereinunder.

(crystal melting peak at 190˚C or higher)

The resin composition of the present invention shows a crystal melting peak of stereocomplex-phase polylactic acid at 190˚C or higher in differential scanning calorimeter measurement (DSC measurement). This is because the resin composition of the present invention cannot exhibit the heat resistance of stereocomplex polylactic acid and cannot maintain its impact strength at 4 to 15 $kJ/m^2$ and its flexural modulus at 2.5 to 6 GPa when the crystal melting peak of stereocomplex-phase polylactic acid is not observed at 190˚C or higher.

(biomass ratio)

The resin composition of the present invention has a biomass ratio of not less than 50 %. When it has a biomass ratio of not less than 50 %, it can meet demand from the society completely. For the consideration of the environment, the biomass ratio is preferably not less than 60 %, more preferably not less than 70 %.
The biomass ratio can be obtained by preparing a mixture of a plastic derived from unknown components and compost (sample) and only compost (blank), decomposing them under the same environment for several days to several months, and measuring the $^{14}C$ concentration of generated carbon dioxide by AMS (acceleration mass spectrometry) (AMS method). As for a plastic whose starting materials and components are known, the biomass ratio of the plastic can be calculated from the weight ratio of a bio-derived component to an oil-derived component (calculation method), and it is known that these biomass ratios match well. Therefore, the biomass ratio in the present invention can be obtained by the following calculation method.

Biomass ratio (%) = (weight of polylactic acid (component B) + weight of another biomass component)/total weight of composition x 100

(notched Izod impact strength)

The notched Izod impact strength of a test piece molded from the resin composition of the present invention is 4 to 15 kJ/$m^2$, preferably 4 to 7.5 kJ/$m^2$. The notched Izod impact strength is measured with an Izod impact tester in accordance with JIS-K7110 (ISO180).

(flexural modulus)

The flexural modulus of a test piece molded from the resin composition of the present invention is 2.5 to 6 GPa. The flexural modulus is measured in accordance with JIS-K7017 (ISO/FDIS 14125).

(moisture absorptivity)

The moisture absorptivity of the resin composition of the present invention is preferably less than 1 wt%. The moisture absorptivity is obtained by drying the sample in vacuum at 120˚C for 5 hours, leaving it in a 25˚C 60 %RH atmosphere for 1 week and obtaining its weight increase to calculate the amount of absorbed moisture.

(stereo crystallization ratio, stereo crystal rate)

Preferably, the resin composition of the present invention has a stereo crystallization ratio (Cr) of not less than 50 % and a stereo crystal rate (S) of not less than 80 %.

The stereo crystallization ratio (Cr) is represented by the following equation (1).

$$Cr\ (\%) = [\Sigma I_{SCi}/(\Sigma I_{SCi} + I_{HM})] \times 100 \quad (1)$$

$$\Sigma I_{SCi} = I_{SC1} + I_{SC2} + I_{SC3}$$

$I_{sci}$ (i = 1 to 3) is the integral intensity of a diffraction peak at 2θ = 12.0˚, 20.7˚ or 24.0˚, $\Sigma I_{sci}$ is the total of integral intensities of diffraction peaks derived from a stereocomplex crystal, and $I_{HM}$ is the integral intensity of a diffraction peak derived from a homocrystal in wide-angle X-ray diffraction (XRD) measurement.

The stereo crystal rate (S) is represented by the following equation (2) from the melting enthalpy of a polylactic acid crystal in DSC measurement.

$$S\ (\%) = [(\Delta Hms/\Delta Hms^0)/(\Delta Hmh/\Delta Hmh^0 + \Delta Hms/\Delta Hms^0)] \times 100 \quad (2)$$

($\Delta Hms^0$ = 203.4 J/g, $\Delta Hmh^0$ = 142 J/g, ΔHms = crystal melting enthalpy of stereocomplex-phase polylactic acid, and ΔHmh = melting enthalpy of a polylactic acid homo-phase crystal)

A high stereo crystallization ratio (Cr) means that the content of an L-and/or D-polylactic acid homocrystal is low in the polylactic acid contained in the resin composition and that the amount of a component molten by heating at 170˚C or lower is small. A high stereo crystal rate (S) means that the content of stereocomplex polylactic acid molten by heating at 190˚C or higher is high. That is, when the both values fall within the above ranges, the heat resistance of the resin composition can be increased effectively and the impact strength and flexural modulus of the resin composition can be improved.

In this sense, the stereo crystallization ratio (Cr) of the resin composition is more preferably not less than 55 %, much more preferably not less than 60 %. The stereo crystal rate (S) is more preferably not less than 85 %, much

more preferably not less than 95 %, particularly preferably 100 % in which only the melting peak of the stereocomplex polylactic acid-phase crystal is observed. Preferably, the resin composition of the present invention has a stereo crystallization ratio (Cr) of not less than 50 % and a stereo crystal rate (S) of not less than 95 %.

(lactide content)

The lactide content, that is, the total content of L-lactide and D-lactide in the resin composition of the present invention is preferably 0 to 700 wtppm, more preferably 0 to 200 wtppm, much more preferably 0 to 100 wtppm. Although the lactide content is preferably lower from the viewpoint of physical properties such as color, even when the excessive reduction operation is made, further improvement of physical properties is not expected and it may be unpreferred from the viewpoint of cost.

(carboxyl group concentration)

The carboxyl group concentration of the resin composition of the present invention is preferably 0 to 30 eq/ton, more preferably 0 to 10 eq/ton, much more preferably 0 to 5 eq/ton, particularly preferably 0 to 1 eq/ton.

(aromatic polyester: component A)

The aromatic polyester (component A) used in the present invention has a butylene terephthalate skeleton as the main constituent unit. The expression "main" as used herein means that the molar fraction of the butylene terephthalate skeleton in the aromatic polyester is not less than 50 mol%. The content of the butylene terephthalate skeleton is preferably not less than 70 %, more preferably not less than 85 %, much more preferably not less than 95 % in terms of molar fraction from the viewpoint of improving moldability.

The aromatic polyester (component A) may contain a comonomer except for the butylene terephthalate skeleton. The comonomer is selected from hydroxycarboxylic acid, dicarboxylic acid and diol. Examples of the hydroxycarboxylic acid include glycolic acid, D-lactic acid, L-lactic acid, 3-hydroxypropionic acid, 4-hydroxybutanoic acid, 3-hydroxybutanoic acid, 6-hydroxycaproic acid, hydroxybenzoic acid and hydroxynaphthalenecarboxylic acid. Examples of the dicarboxylic acid include aromatic dicarboxylic acids such as isophthalic acid, naphthalenedicarboxylic acid, diphenoxyethanecarboxylic acid, diphenyl ether dicarboxylic acid and diphenyl sulfone dicarboxylic acid. Bifunctional carboxylic acids such as alicyclic dicarboxylic acids including hexahydroterephthalic acid and hexahydroisophthalic acid, aliphatic dicarboxylic acids including succinic acid, adipic acid, sebacic acid and azelaic acid, and oxyacids including p-β-hydroxyethoxybenzoic acid and ε-oxybenzoic acid are also included. Examples of the diol include trimethylene glycol, tetramethylene glycol, hexamethylene glycol, decamethylene glycol, neopentyl glycol, diethylene glycol, 1,1-cyclohexanedimethanol, 1,4-cyclohexanedimethanol, 2,2-bis(4'-β-hydroxyphenyl)propane and bis(4'-β-hydroxyethoxyphenyl)sulfonic acid.

The intrinsic viscosity of the aromatic polyester (component A) is preferably 0.5 to 2.0, more preferably 0.7 to 1.8, much more preferably 0.8 to 1.5. The carboxyl group concentration of the aromatic polyester (component A) is preferably 0 to 60 eq/ton. Therefore, it is preferred that the aromatic polyester (component A) should have a carboxyl group concentration of 0 to 60 eq/ton and an intrinsic viscosity of 0.7 to 1.8.

The content of the aromatic polyester (component A) is preferably 5 to 50 parts by weight based on 100 parts by weight of the total of the components A and B. It is more preferably 6 to 45 parts by weight, particularly preferably 7 to 40 parts by weight from the viewpoints of the effect of improving moldability which is the object of the present invention and use of a bio-based polymer.

(polylactic acid: component B)

The polylactic acid (component B) contains a stereocomplex polylactic acid formed from poly(L-lactic acid) and poly(D-lactic acrid). The poly(L-lactic acid) and the poly(D-lactic acid) are substantially composed of an L-lactic acid unit and a D-lactic acid unit represented by the following formula (3), respectively.

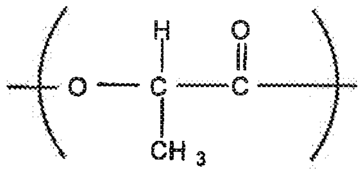

(3)

The poly(L-lactic acid) contains preferably 90 to 100 mol%, more preferably 95 to 100 mol%, 99 to 100 mol% of the L-lactic acid unit to achieve a high melting point or 95 to 99 mol% of the L-lactic acid unit when priority is placed on the stereo crystal rate. The other units are a D-lactic acid unit and a unit except for lactic acid. The total content of the other units is preferably 0 to 10 mol%, more preferably 0 to 5 mol%, much more preferably 0 to 2 mol%.

The poly(D-lactic acid) contains preferably 90 to 100 mol%, more preferably 95 to 100 mol%, 99 to 100 mol% of the L-lactic acid unit to achieve a high melting point or 95 to 99 mol% of the L-lactic acid unit when priority is placed on the stereo crystal rate. The other units are a D-lactic acid unit and a unit except for lactic acid. The total content of the other units is preferably 0 to 10 mol%, more preferably 0 to 5 mol%, much more preferably 0 to 2 mol%.

Examples of the other units include units derived from dicarboxylic acid, polyhydric alcohol, hydroxycarboxylic acid or lactone having a functional group capable of forming at least two ester bonds and units derived from a polyester, polyether or polycarbonate comprising these components.

Examples of the dicarboxylic acid include succinic acid, adipic acid, azelaic acid, sebacic acid, terephthalic acid and isophthalic acid. Examples of the polyhydric alcohol include aliphatic polyhydric alcohols such as ethylene glycol, propylene glycol, butanediol, pentanediol, hexanediol, octanediol, glycerin, sorbitan, neopentyl glycol, diethylene glycol, triethyleneglycol, polyethylene glycol and polypropylene glycol, and aromatic polyhydric alcohols obtained by adding ethylene oxide to a bisphenol. Examples of the hydroxycarboxylic acid include glycolic acid and hydroxybutyric acid. Examples of the lactone include glycolide, ε-caprolactone, β-propiolactone, δ-butyrolactone, β- or γ-butyrolactone, pivalolactone and δ-valerolactone.

The poly(L-lactic acid) and the poly(D-lactic acid) can be produced by a conventionally known method. For example, they can be produced by heating and ring-opening polymerizing L- or D-lactide in the presence of a metal polymerization catalyst. They can also be produced by crystallizing polylactic acid having a low molecular weight which contains a metal polymerization catalyst and solid-phase polymerizing it by heating under reduced pressure or in an inert gas stream. Further, they can be produced by a direct polymerization, process in which lactic acid is dehydrated and condensed in the presence or absence of an organic solvent.

A polymerization reaction can be carried out in a conventionally known reactor. For example, vertical reactors or horizontal reactors having a high-viscosity agitation blade such as helical ribbon blade may be used alone or in combination. Alternatively, a batch reactor, a continuous reactor and a semibatch reactor may be used alone or in combination.

An alcohol may be used as a polymerization initiator. The alcohol is preferably a nonvolatile alcohol which does not impede the polymerization of the polylactic acid, such as decanol, dodecanol, tetradecanol, hexadecanol or octadecanol.

In the solid-phase polymerization process, a lactic acid polyester having a relatively low molecular weight obtained by the above ring-opening polymerization or the direct polymerization of lactic acid is used as a prepolymer. It is preferred from the viewpoint of the prevention of fusion that the prepolymer should be crystallized at a temperature equal to or higher than its glass transition temperature (Tg) and lower than its melting point (Tm) in advance. The crystallized prepolymer is charged into a fixed vertical or horizontal reactor or rotary reactor (such as rotary kiln) whose vessel rotates, such as tumbler or kiln, to be heated at a temperature equal to or higher than the glass transition temperature (Tg) of the prepolymer and lower than its melting point (Tm). The polymerization temperature may be raised stepwise along with the proceeding of polymerization. The reduction of the inside pressure of the above reactor and the circulation of the heated inert gas stream are preferably both carried out in order to efficiently remove water generated during the solid-phase polymerization.

It is preferred that the metal-containing catalyst used at the time of polymerizing the polylactic acid should be inactivated with a conventionally known deactivator.

Examples of the deactivator include organic ligands consisting of chelate ligands which have an imino group and can coordinate to the polymerization metal catalyst; low oxidation number phosphoric acids having an acid number of 5 or less, such as dihydride oxophosphoric acid (I), dihydride tetraoxodiphosphoric acid (II,II), hydride trioxophosphoric acid (III), dihydride pentaoxodiphosphoric acid (III), hydride pentaoxodiphosphoric acid (II, IV), dodecaoxohexaphosphoric acid (III), hydride octaoxotriphosphoric acid (III, IV, IV), octaoxotriphosphoric acid (IV, III, IV), hydride hexaoxodiphosphoric acid (III, V), hexaoxodiphosphoric acid (IV), decaoxotetraphosphoric acid (IV), hendecaoxotetraphosphoric acid (VI) and enneaoxotriphosphoric acid (V, IV, IV); orthotriphosphoric acids represented by the formula $xH_2O \cdot yP_2O_5$ and satisfying x/y = 3; polyphosphoric acids called "diphosphoric acid, triphosphoric acid, tetraphosphoric acid and pentaphosphoric acid" according to the degree of condensation all of which satisfy 2 > x/y > 1 and mixtures thereof; metaphosphoric acids which satisfy x/y = 1, particularly trimetaphosphoric acid and tetrametaphosphoric acid; ultraphosphoric acids satisfying 1 > x/y > 0 and having a net-like structure and part of a phosphorus pentaoxide structure (may be collectively referred to as "metaphosphoric acid-based compounds"); and acidic salts, partial esters and whole esters of amonohydric or polyhydric alcohol or a polyalkylene glycol, and phosphono-substituted lower aliphatic carboxylic acid derivatives of these acids.

Orthophosphoric acids represented by the formula $xH_2O \cdot yP_2O_5$ and satisfying x/y = 3 are preferred from the viewpoint of catalyst deactivation ability. Polyphosphoric acids called "diphosphoric acid, triphosphoric acid, tetraphosphoric acid and pentaphosphoric acid" according to the degree of condensation and satisfying 2 > x/y > 1 and mixtures thereof are also preferred. Metaphosphoric acids satisfying x/y = 1, particularly trimetaphosphoric acid and tetrametaphosphoric acid are preferred. Ultraphosphoric acids having a net-like structure and part of a phosphorus pentaoxide structure and satisfying 1 > x/y > 0 (may be collectively referred to as "metaphosphoric acid-based compounds") are also preferred. Acidic salts, partial ester phosphorus oxoacids or acidic esters of a monohydric or polyhydric alcohol or a polyalkylene glycol, and phosphono-substituted lower aliphatic carboxylic acid derivatives of these acids are further preferred.

The metaphosphoric acid-based compounds include cyclic metaphosphoric acids in which 3 to 200 phosphoric acid units are condensed, ultra-region metaphosphoric acids having a solid net-like structure, and alkali metal salts, alkali earth metal salts and onium salts thereof. Out of these, cyclic sodium metaphosphate, ultra-region sodium metaphosphate and dihexylphosphonoethyl acetate (may be abbreviated as DHPA hereinafter) of a phosphono-substituted lower aliphatic carboxylic acid derivative are advantageously used.

The polylactic acid (component B) has a composite phase composed of poly(L-lactic acid) and poly(D-lactic acid) and is capable of forming a stereocomplex crystal. The poly (L-lactic acid) and the poly(D-lactic acid) have a weight average molecular weight of preferably 100,000 to 500,000, more preferably 150,000 to 350,000, respectively.

The weight ratio of the poly(L-lactic acid) to the poly(D-lactic acid) in the polylactic acid (component B) is preferably 90:10 to 10:90, more preferably 75:25 to 25:75, much more preferably 60:40 to 40:60. The weight ratio is preferably as close to 50:50 as possible.

The weight average molecular weight of the polylactic acid (component B) is preferably 100,000 to 500,000, more preferably 100,000 to 300,000. The weight average molecular weight is a weight average molecular weight value in terms of standard polystyrene measured by gel permeation chromatography (GPC) using chloroform as an eluent.

Preferably, the polylactic acid (component B) has crystallinity with a stereo crystallization ratio (Cr) of not less than 50 %. The stereo crystallization ratio (Cr) is defined by the above equation (1). Cr of the component B is preferably 50 to 100 %, more preferably 60 to 95 %, particularly preferably 65 to 90 %.

The stereo crystal rate (S) of the polylactic acid (component B) is preferably not less than 80 %. The stereo crystal rate (S) is defined by the above equation (2). That is, the stereocomplex phase is formed fully in the polylactic acid (component B). The stereo crystal rate (S) is a parameter indicative of the proportion of the stereocomplex polylactic acid crystal formed finally in the heat treatment step.

Preferably, the polylactic acid (component B) has a stereo crystallization ratio (Cr) of not less than 50 % and a stereo crystal rate (S) of not less than 80 %.

The crystal melting point of the polylactic acid (component B) is preferably 190 to 250˚C, more preferably 200 to 220˚C. The crystal melting enthalpy is preferably not less than 20 J/g, more preferably not less than 30 J/g.

When the polylactic acid (component B) has a stereo crystallization ratio (Cr), a stereo crystal rate (S) and a crystal melting point within the above ranges, the resin composition of the present invention becomes excellent in moldability, heat resistance and stability.

The lactide content of the polylactic acid (component B) is preferably 0 to 700 wtppm, more preferably 0 to 500 wtppm, much more preferably 0 to 200 wtppm, particularly preferably 0 to 100 wtppm. When the polylactic acid (component B) has a lactide content within the above range, the stability at the time of melting of the resin composition is improved, a molded article can be manufactured efficiently at a short molding cycle, and the hydrolysis resistance and gas reduction property of the molded article can be enhanced. To reduce the lactide content to the above range, conventionally known lactide reduction treatments may be used alone or in combination in any stage from the polymerization of the poly(L-lactic acid) and the poly(D-lactic acid) to the end of the production of the polylactic acid (component B).

The carboxyl group concentration of the polylactic acid (component B) is preferably not more than 10 eq/ton, more preferably not more than 2 eq/ton, much more preferably not more than 1 eq/ton. When the carboxyl group concentration falls within this range, a resin composition having excellent melt stability and moist heat resistance can be obtained. To reduce the carboxyl group concentration to not more than 10 eq/ton, a conventionally known method for reducing the carboxyl terminal group concentration in polyesters may be advantageously used. Stated more specifically, a moist heat resistance accelerator may be added, or esterification or amidization with an alcohol or amine may be carried out without adding a terminal capping agent.

A carboxyl group capping agent having a specific functional group which will be described hereinafter may be used as the moist heat resistance accelerator. Particularly a carbodiimide compound having a carbodiimide group as the specific functional group can cap a carboxyl group effectively and is preferably selected from the viewpoint of the colors of the polylactic acid and the resin composition of the present invention, the promotion of the formation of a stereocomplex phase and moist heat resistance.

Preferably, the polylactic acid (component B) contains 0.001 to 5 wt% of a carbodiimide compound (component D) and has a carboxyl group concentration of not more than 10 eq/ton and a lactide content of 0 to 700 wtppm.

In the resin composition of the present invention, the content of the polylactic acid (component B) is 50 parts or more by weight and less than 100 parts by weight based on 100 parts by weight of the total of the components A and B. With this composition, a biomass ratio of not less than 50 % can be advantageously achieved, and an impact strength of 4 to 15 kJ/$m^2$ and a flexural modulus of 2.5 to 6 GPa can also be advantageously achieved. The heat resistance and hydrolysis resistance of the resin composition having the above values can be advantageously enhanced. The content of the component B is preferably 55 to 95 parts by weight, more preferably 55 to 90 parts by weight based on 100 parts by weight of the total of the components A and B.

Preferably, the resin composition of the present invention contains 50 parts or more and less than 100 parts by weight of the component B and 1 to 30 parts by weight of the component C based on 100 parts by weight of the total of the components A and B.

The polylactic acid (component B) can be produced by making the poly(L-lactic acid) and the poly(D-lactic acid) coexistent in a predetermined weight ratio and mixing them together.

The above mixing may be carried out in the presence of a solvent. The solvent is not particularly limited if it dissolves the poly(L-lactic acid) and the poly(D-lactic acid). Chloroform, methylene chloride, dichloroethane, tetrachloroethane, phenol, tetrahydrofuran, N-methylpyrrolidone, N,N-dimethylformamide, butyrolactone, trioxane, hexafluoroisopropanol or a mixture of two or more of these is preferred as the solvent.

The polyr(L-lactic acid) and the poly(D-lactic acid) may be mixed together in the absence of a solvent. That is, predetermined amounts of the poly(L-lactic acid) and the poly(D-lactic acid) are mixed together and then melt kneaded together, or one of them is molten and the other is added to and kneaded with the molten one.

Alternatively, stereoblock polylactic acid in which a poly(L-lactic acid) segment and a poly(D-lactic acid) segment are bonded together may also be advantageously used. This stereoblock polylactic acid is a block polymer in which the poly(L-lactic acid) segment and the poly(D-lactic acid) segment are bonded together in the molecule.

This block polymer can be produced, for example, by sequential ring-opening polymerization, by polymerizing poly(L-lacticacid) and poly (D-lactic acid) and then bonding them together through a chain exchange reaction or with a chain extender, by polymerizing poly(L-lactic acid) and poly(D-lactic acid), blending them together and solid-phase polymerizing the blend to extend the chain, or produced from racemilactide by using a stereoselective ring-opening polymerization catalyst. Any block copolymer having the above basic constitution may be used no matter how it is produced. However, a stereoblock polymer having a high melting point obtained by sequential ring-opening polymerization and a polymer obtained by solid-phase polymerization are preferred because they are easily produced.

(additives to component B)

Specific additives are preferably added to the polylactic acid (component B) used in the present invention in order to promote the formation of a complex phase stably and fully. The following additives are used.

(stereorization accelerator)

A phosphoric acid metal salt represented by the following formula (4) is used as a stereorization accelerator.

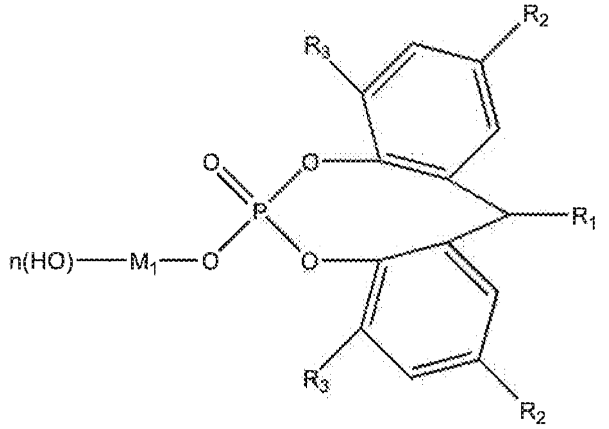

(4)

In the above formula, $R_1$ is a hydrogen atom or alkyl group having 1 to 4 carbon atoms, $R_2$ and $R_3$ may be the same or different and each a hydrogen atom or alkyl group having 1 to 12 carbon atoms, $M_1$ is an alkali metal atom, alkali earth metal atom, zinc atom or aluminum atom, and n is 0 when $M_1$ is an alkali metal atom, alkali earth metal atom or zinc atom and 1 or 2 when $M_1$ is an aluminum atom.

$M_1$ is Na, K, Al, Mg or Ca, particularly preferably K, Na or Al.

The phosphoric acid metal salt represented by the formula (4) is used in an amount of preferably 10 ppm to 2 wt%, more preferably 50 ppm to 0.5 wt%, much more preferably 100 ppm to 0.3 wt% based on the polylactic acid (component B). When the content of the phosphoric acid metal salt is too low, its effect of improving the stereo crystal rate becomes small and when the content is too high, it deteriorates the resin itself disadvantageously.

Further, a so-called crystal nucleating agent is preferably used to strengthen the function of the phosphoric acid metal salt. Various agents listed in the item for crystal nucleating agent may be used as the crystal nucleating agent, out of which calcium silicate, talc, kaolinite and montmorillonite are preferably selected. The amount of the crystal nucleating agent for strengthening the function of the phosphoric acid metal salt is preferably 0.05 to 5 parts by weight, more preferably 0.06 to 2 parts by weight, much more preferably 0.06 to 1 part by weight based on 100 parts by weight of the polylactic acid (component B).

(block forming agent)

A compound having at least one group in a molecule selected from the group consisting of an epoxy group, oxazoline group, oxazine group, isocyanate group, ketene group and carbodiimide group (may be referred to as "specific functional group" hereinafter) is used as a block forming agent.

The specific functional group of the block forming agent reacts with the terminal of the molecule of the polylactic acid (component B) to connect some poly (L-lactic acid) units and some poly(D-lactic acid) units so as to form blocked polylactic acid, thereby promoting the formation of the stereocomplex phase.

(epoxy compound)

A glycidyl ether compound, glycidyl ester compound, glycidyl amine compound, glycidyl imide compound, glycidyl amide compound or alicyclic epoxy compound is preferably used as the epoxy compound. A resin composition and a molded article having excellent mechanical properties, moldability, heat resistance and durability can be obtained by using this compound. Examples of the glycidyl ether compound include stearyl glycidyl ether, phenyl glycidyl ether, ethylene oxide lauryl alcohol glycidyl ether, ethylene glycol diglycidyl ether, polyethylene glycol diglycidyl ether, polypropylene glycol diglycidyl ether, neopentylene glycol diglycidyl ether, polytetramethylene glycol diglycidyl ether, glycerol triglycidyl ether, trimethylolpropane triglycidyl ether, pentaerythritol tetraglycidyl ether and bisphenol A diglycidyl ether type epoxy resin obtained from a condensation reaction between a bisphenol such as bis(4-hydroxyphenyl)methane and epichlorohydrin. Out of these, bisphenol A diglycidyl ether type epoxy resin is preferred.

Examples of the glycidyl ester compound include benzoic acid glycidyl ester, stearic acid glycidyl ester, barsatic acid glycidyl ester, terephthalic acid diglycidyl ester, phthalic acid diglycidyl ester, cyclohexanedicarboxylic acid diglycidyl ester, adipic acid diglycidyl ester, succinic acid diglycidyl ester, dodecanedionic acid diglycidyl ester and pyromellitic acid tetraglycidyl ester. Out of these, benzoic acid glycidyl ester and barsatic acid glycidyl ester are preferred.

Examples of the glycidylamine compound include tetraglycidylamine diphenylmethane, triglycidyl-p-aminophenol, diglycidylaniline, diglycidyl toluidine, tetraglycidyl metaxylenediamine and triglycidyl isocyanurate.

Examples of the glycidylimide and glycidylamide compounds include N-glycidylphthalimide, N-glycidyl-4,5-dimethylphthalimide, N-glycidyl-3,6-dimethylphthalimide, N-glycidylsuccinimide, N-glycidyl-1,2,3,4-tetrahydrophthalimide, N-glycidylmaleinimide, N-glycidylbenzamide and N-glycidylstearylamide. Out of these, N-glycidylphthalimide is preferred.

Examples of the alicyclic epoxy compound include 3,4-epoxycyclohexyl-3,4-cyclohexylcarboxylate, bis(3,4-epoxycyclohexylmethyl)adipate, vinyl cyclohexenediepoxide, N-methyl-4,5-epoxycyclohexane-1,2-dicarboxylic acid imide and N-phenyl-4,5-epoxycyclohexane-1,2-dicarboxylic acid imide.

The other epoxy compounds include epoxy modified fatty acid glycerides such as epoxylated soy oil, epoxylated linseed oil and epoxylated whale oil, phenol novolak type epoxy resin and cresol novolak type epoxy resin.

(oxazoline compound)

Examples of the oxazoline compound include 2-methoxy-2-oxazoline, 2-butoxy-2-oxazoline, 2-stearyloxy-2-oxazoline, 2-cyclohexyloxy-2-oxazoline 2-allyloxy-2-oxazoline, 2-benzyloxy-2-oxazoline, 2-p-phenylphenoxy-2-oxazoline, 2-methyl-2-oxazoline, 2-cyclohexyl-2-oxazoline, 2-methallyl-2-oxazoline, 2-crotyl-2-oxazoline, 2-phenyl-2-oxazoline, 2-o-ethylphenyl-2-oxazoline, 2-o-propylphenyl-2-oxazoline, 2-p-phenylphenyl-2-oxazoline, 2,2'-bis(2-oxazoline), 2,2'-bis(4-methyl-2-oxazoline), 2,2'-bis(4-butyl-2-oxazoline), 2,2'-m-phenylenebis(2-oxazoline), 2,2'-p-phenylenebis(2-oxazoline), 2,2'-p-phenylenebis(4-methyl-2-oxazoline), 2,2'-p-phenylenebis(4,4'-methyl-2-oxazoline), 2,2'-ethylenebis (2-oxazoline), 2,2'-tetramethylenebis(2-oxazoline), 2,2'-hexamethylenebis(2-oxazoline), 2,2'-ethylenebis(4-methyl-2-oxazoline), 2,2'-tetramethylenebis(4,4'-dimethyl-2-oxazoline), 2,2'-cyclohexylenebis(2-oxazoline) and 2,2'-diphenylenebis(4-methyl-2-oxazoline). Polyoxazoline compounds comprising the above compound as a monomer unit are also included.

(oxazine compound)

Examples of the oxazine compound include 2-methoxy-5,6-dihydro-4H-1,3-oxazine, 2-hexyloxy-5,6-dihydro-4H-1,3-oxazine, 2-decyloxy-5,6-dihydro-4H-1,3-oxazine, 2-cyclohexyloxy-5,6-dihydro-4H-1,3-oxazine, 2-allyloxy-5,6-dihydro-4H-1,3-oxazine and 2-crotyloxy-5,6-dihydro-4H-1,3-oxazine.

Further, 2,2'-bis(5,6-dihydro-4H-1,3-oxazine), 2,2'-methylenebis(5,6-dihydro-4H-1,3-oxazine), 2,2'-ethylenebis(5,6-dihydro-4H-1,3-oxazine), 2,2'-hexamethylenebis(5,6-dihydro-4H-1,3-oxazine), 2,2'-p-phenylenebis(5,6-dihydro-4H-1,3-oxazine) and 2,2'-P,P'-diphenylenebis(5,6-dihydro-4H-1,3-oxazine) are also included. Polyoxazine compounds comprising the above compound as a monomer unit are further included.

Out of the above oxazoline compounds and oxazine compounds, 2,2'-m-phenylenebis(2-oxazoline) and 2,2'-p-phenylenebis(2-oxazoline) are preferred.

(isocyanate compound)

An aromatic, aliphatic or alicyclic isocyanate compound or a mixture thereof may be used as the isocyanate compound.

Examples of the monoisocyanate compound include phenyl isocyanate, tolyl isocyanate, dimethylphenyl isocyanate, cyclohexyl isocyanate, butyl isocyanate and naphthyl isocyanate.

Examples of the diisocyanate include 4,4'-diphenylmethane diisocyanate, 4,4'-diphenyldimethylmethane diisocyanate, 1,3-phenylenediisocyanate, 1,4-phenylenediisocyanate, 2,4-tolylenediisocyanate, 2,6-tolylenediisocyanate, mixture of 2,4-tolylenediisocyanate and 2,6-tolylenediisocyanate, cyclohexane-4,4'-diisocyanate, xylylene diisocyanate, isophorone diisocyanate, dicyclohexylmethane-4,4'-diisocyanate, methylcyclohexane diisocyanate, tetramethylxylylene diisocyanate and 2,6-diisopropylphenyl-1,4-diisocyanate. Out of these isocyanate compounds, aromatic isocyanates such as 4,4'-diphenylmethane diisocyanate and phenyl isocyanate are preferred.

(ketene compound)

An aromatic, aliphatic or alicyclic ketene compound or a mixture thereof may be used as the ketene compound. Examples of the ketene compound include diphenyl ketene, bis(2,6-di-t-butylphenyl)ketene, bis (2,6-di-isopropylphenyl) ketene and dicyclohexyl ketene. Out of these ketene compounds, aromatic ketenes such as diphenyl ketene, bis(2,6-di-t-butylphenyl)ketene and bis(2,6-di-isopropylphenyl)ketene are preferred.

(carbodiimide compound: component D)

The resin composition of the present invention preferably comprises a carbodiimide compound (component D) . Examples of the carbodiimide compound include mono- and poly-carbodiimide compounds such as dicyclohexylcarbodiimide, diisopropylcarbodiimide, diisobutylcarbodiimide, dioctylcarbodiimide, octyldecylcarbodiimide, di-t-butylcarbodiimide, dibenzylcarbodiimide, diphenylcarbodiimide, N-octadecyl-N'-phenylcarbodiimide, N-benzyl-N'-phenylcarbodiimide, N-benzyl-N'-tolylcarbodiimide, di-o-toluylcarbodiimide, di-p-toluylcarbodiimide, bis(p-aminophenyl)carbodiimide, bis(p-chlorophenyl)carbodiimide, bis(o-chlorophenyl)carbodiimide, bis(o-ethylphenyl)carbodiimide, bis(p-ethylphenyl)carbodiimide, bis(o-isopropylphenyl)carbodiimide, bis(p-isopropylphenyl)carbodiimide, bis(o-isobutylphenyl) carbodiimide, bis(p-isobutylphenyl)carbodiimide, bis(2,5-dichlorophenyl)carbodiimide, bis(2,6-dimethylphenyl)carbodiimide, bis(2,6-diethylphenyl)carbodiimide, bis(2-ethyl-6-isopropylphenyl)carbodiimide, bis(2-butyl-6-isopropylphenyl) carbodiimide, bis(2,6-diisopropylphenyl)carbodiimide, bis(2,6-di-t-butylphenyl)carbodiimide, bis(2,4,6-trimethylphenyl) carbodiimide, bis(2,4,6-triisopropylphenyl)carbodiimide, bis(2,4,6-tributylphenyl)carbodiimide, dißnaphthylcarbodiimide, N-tolyl-N'-cyclohexylcarbodiimide, N-tolyl-N'-phenylcarbodiimide, p-phenylenebis(o-toluylcarbodiimide), p-phenylenebis(cyclohexylcarbodiimide), p-phenylenebis(p-chlorophenylcarbodiimide), 2,6,2',6'-tetraisopropyldiphenylcarbodiimide, hexamethylenebis(cyclohexylcarbodiimide), ethylenebis(phenylcarbodiimide) and ethylenebis(cyclohexylcarbodiimide).

Out of these, bis(2,6-diisopropylphenyl)carbodiimide and 2,6,2',6'-tetraisopropyldiphenylcarbodiimide are preferred from the viewpoints of reactivity and stability. Dicyclohexylcarbodiimide and bis (2,6-diisopropylphenyl) carbodiimide which are available industrially may be advantageously used. Further, commercially available polycarbodiimide compounds may be advantageously used because they do not need to be synthesized. The commercially available polycarbodiimide compounds include Carbodilite (registered trademark) LA-1 and HMV-8CA which are marketed by Nisshinbo Industries, Inc.

Out of these, a compound having a carbodiimide group, that is, a carbodiimide compound is preferred as the block forming agent from the viewpoint of its influence upon the color, thermal decomposition and hydrolysis resistance of the resin composition of the present invention.

The amount of the block forming agent is preferably 0.001 to 5 parts by weight, more preferably 0.01 to 3 parts by weight based on 100 parts by weight of the polylactic acid (component B). When the amount of the block forming agent exceeds the above range, concerns about the deterioration of the color of the resin or the occurrence of plasticization become large disadvantageously. When the amount of the block forming agent is smaller than 0.001 part by weight, its effect is rarely observed and its industrial significance is small.

Although the stereorization accelerator and the block forming agent can be used independently, when they are used in combination, the formation of the stereocomplex phase can be promoted more effectively.

The polylactic acid (component B) preferably contains a carbodiimide compound (component D) as the block forming agent and moist heat resistance accelerator. The content of the carbodiimide compound (component D) is preferably 0.001 to 5 parts by weight based on 100 parts by weight of the component B. When the content of the carbodiimide compound is lower than 0.001 part by weight, its function is exhibited unsatisfactorily as the block forming agent and carboxyl group capping agent. When the content exceeds the above range, concerns about the deterioration of the color of the resin or the occurrence of plasticization become large disadvantageously.

The resin composition of the present invention preferably comprises 0.001 to 5 wt% of the carbodiimide compound (component D) based on the total of the components A, B and C. When the content of the component D falls within the above range, the stability to water and hydrolysis resistance stability of the composition can be advantageously enhanced. From this point of view, the content of the component D is more preferably 0.01 to 5 wt%, much more preferably 0.1 to 4 wt%. When the content falls below this range, the effect of the component D is not observed effectively. When the content exceeds this range, the further improvement of hydrolysis resistance stability is not expected and an unpreferred phenomenon that the color of the composition deteriorates may occur.

(modifier: component C)

The resin composition of the present invention comprises a modifier (component C). The modifier (component C) is preferably at least one resin selected from the group consisting of a copolyester, copolyethylene and core-shell type resin having silicone/acrylic or acrylic rubber. Stiffness, impact resistance and low moisture absorptivity which are the objects of the present invention can be achieved by the modifier (component C).

Examples of the copolyester include a copolyester containing a polylactic acid component and a copolyester having a star-like structure and containing a polybutylene adipate terephthalate component. A copolyester having a star-like structure and containing terephthalic acid and adipic acid as acid components and tetraethylene glycol as a diol component is preferred.

Specific examples of the copolyester include Plamate (registered trademark) PD-150 and PD-350 marketed

by Dainippon Ink and Chemicals, Inc.

Ecoflex (registered trademark) SBX7025 marketed by BASF Japan Co., Ltd. is also included.

Examples of the copolyethylene include Bond Fast (registered trademark) E comprising ethylene and glycidyl methacrylate and Bond Fast (registered trademark) 7M further comprising a methyl acrylate unit, both marketed, by Sumitomo Chemical Co., Ltd., and Biomax (registered trademark) Strong 100 marketed by DuPont Co., Ltd.

Examples of the core-shell type resin having silicone/acrylic or acrylic rubber include Metabrene (registered trademark) S-2001 and W-450A marketed by Mitsubishi Rayon Co., Ltd.

By selecting a preferred one from among these compounds and using it, stiffness and impact resistance can be provided to the resin composition comprising polylactic acid having a stereocomplex phase and PBT and the moisture absorptivity of the resin composition can be advantageously reduced to not more than 1 wt%. By reducing the moisture absorptivity of the resin composition to not more than 1 wt%, the hydrolysis resistance stability of the resin composition of the present invention can be improved for a longer time than before. That is, in the conventional chemical technique in which a carboxyl group capping agent such as a carbodiimide is added, the agent is consumed by water from the outside of the system, thereby reducing its effect. In contrast to this, the resin composition of the present invention has an advantage that its effect is kept permanently.

The moisture absorptivity of the resin composition is preferably as small as possible but it is practically difficult to reduce it to not more than 0.01 wt%. Even when the moisture absorptivity is reduced so much, the hydrolysis resistance stability of the resin composition is not improved.

Therefore, the moisture absorptivity of the resin composition is selected from a range of preferably 0.01 to 0.9 wt%, more preferably 0.02 to 0.8 wt%.

In consideration of these physical properties, the content of the modifier (component C) in the resin composition is preferably 1 to 30 parts by weight, more preferably 2 to 25 parts by weight, much more preferably 3 to 20 parts by weight based on 100 parts by weight of the total of the components A and B.

The component C must be contained in the resin composition of the present invention. When the component C is contained, an impact strength of 4 to 15 $KJ/m^2$, a flexural modulus of 2.5 to 6 GPa and a moisture absorptivity of not more than 1 wt% can be achieved.

Preferably, the resin composition of the present invention has a carbodiimide compound (component D) content of 0.001 to 5 wt% based on the total of the components A, B and C, a lactide content of 0 to 700 wtppm and a carboxyl group concentration of 0 to 30 eq/ton.

(polyamide elastomer: component C)

The resin composition of the present invention may contain a polyamide elastomer as a modifier (component C). The polyamide elastomer is an elastomer comprising a polyamide oligomer as a hard segment and a polyester or polyether ester as a soft segment.

The hard segment is a polyamide oligomer having a number average molecular weight of 500 to 5,000. The acid components of the polyamide oligomer are a polymerization fatty acid having 20 to 48 carbon atoms and a dicarboxylic acid. The diamine component is a diamine having 2 to 20 carbon atoms.

The polyamide oligomer can be obtained by mixing together the dicarboxylic acid and the polymerization fatty acid in a (polymerization fatty acid/dicarboxylic acid) weight ratio of 0.3 to 5.0 to ensure that all the carboxyl groups become substantially equivalent to all the amino groups and polycondensing them in accordance with the method described in JP-A5-320336, for example. That is, after they are fed to a reactor whose inside has been fully substituted by nitrogen and reacted with each other in the presence of a small amount of a catalyst by heating at 200 to 280°C for 1 to 3 hours, a polycondensation reaction is carried out under a reduced pressure of 133.3 Pa (1 mmHg) until the melt viscosity becomes not less than 5 Pa·s at a temperature of 250°C to obtain the polyamide oligomer.

When the (polymerization fatty acid/dicarboxylic acid) weight ratio in the polyamide oligomer is less than 0.3, the flexibility and elastic recovery of the obtained polyamide elastomer become unsatisfactory. Further, in the step of block copolymerization with the soft segment, the compatibility with the soft segment of the polyamide oligomer degrades, causing the separation of a coarse phase during polycondensation, whereby homogeneous polycondensation becomes impossible, the molecular weight does not increase, the transparency of the obtained polyamide elastomer degrades, and the mechanical strength of the polyamide elastomer deteriorates, thereby making it inappropriate to use it in the resin composition of the present invention. When the polymerization fatty acid/dicarboxylic acid weight ratio exceeds 5.0, the mechanical strength and melting point of the component C lower due to the reduction of the cohesive force of the hard segment, thereby making it inappropriate to use it in the resin composition of the present invention.

The number average molecular weight of the polyamide oligomer is preferably in the range of 500 to 5,000. When the number average molecular weight is less than 500, the mechanical strength and melting point of the polyamide elastomer lower due to the reduction of the cohesive force of the hard segment. When the number average molecular weight is more than 5,000, in the step of copolymerizing the next soft segment, the separation of a coarse phase occurs,

whereby homogeneous polycondensation becomes impossible, the molecular weight does not increase, and the transparency and mechanical strength of the component C degrade disadvantageously like when the content of the polymerization fatty acid is too low.

As the polymerization, fatty acid having 20 to 48 carbon atoms may be used a polymerization fatty acid obtained by polymerizing an unsaturated fatty acid, for example, a monobasic fatty acid having at least one double bond or triple bond with 10 to 24 carbon atoms. Examples of the polymerization fatty acid include dimers such as oleic acid, linoleic acid and erucic acid. Commercially available polymerization fatty acids generally contain a dimerized fatty acid as the main component and a fatty acid and a trimerized fatty acid as raw materials. A polymerization fatty acid having a content of the dimerized fatty acid of not less than 70 wt%, preferably not less than 95 wt% and an unsaturation degree reduced by hydrogenation is preferred. Commercially available products such as Polypol 1009 and Polypol 1004 (of Unikema Co., Ltd.) and Enpol 1010 (of Henkel Co. , Ltd.) are particularly preferred. Mixtures thereof may also be used as a matter of course.

As the dicarboxylic acid which is used in combination with the polymerization fatty acid may be preferably used azelaic acid, sebacic acid or a mixture of these from the viewpoints of polymerizability, copolymerizability with the polymerization fatty acid and the physical properties of the obtained polyamide elastomer.

Examples of the diamine having 2 to 20 carbon atoms include diamines such as ethylenediamine, 1,4-diaminobutane, hexamethylenediamine, nonamethylenediamine, undecamethylenediamine, dodecamethylenediamine, 2,2,4-trimethylhexamethylenediamine, bis(4,4'-aminocyclohexyl)methane and metaxylylenediamine.

The soft segment is a polyester or a polyether ester. The diol component of the polyester or polyether ester is (i) an $\alpha,\omega$-dihydroxyhydrocarbon having a number average molecular weight of 200 to 3,000 or (ii) a mixture of a polyoxyalkylene glycol and an $\alpha,\omega$-dihydroxyhydrocarbon having a number average molecular weight of 200 to 3,000. The acid component is a dicarboxylic acid having 6 to 20 carbon atoms.

Examples of (i) the $\alpha,\omega$-dihydroxyhydrocarbon having a number average molecular weight of 200 to 3,000 include a polyolefin glycol and a hydrogenated polybutadiene glycol obtained by polymerizing an olefin or butadiene to hydroxylate its terminal and hydrogenating its double bond.

By mixing the $\alpha,\omega$-dihydroxyhydrocarbon with the polyoxyalkylene glycol, flexibility and water resistance can be improved. However, when the content of the $\alpha,\omega$-dihydroxyhydrocarbon is higher than 80 wt%, the mechanical strength and oil resistance of the obtained component C degrade disadvantageously.

The number average molecular weights of the polyoxyalkylene glycol and the $\alpha,\omega$-dihydroxyhydrocarbon must be in the range of 200 to 3, 000. When the number average molecular weights are lower than 200, the melting point of the obtained component C lowers or the component C having excellent physical properties is not obtained. When the number average molecular weights are higher than 5,000, compatibility with the polyamide oligomer lowers, the number of reaction points becomes small, and the separation of a coarse phase is apt to occur during polycondensation, thereby making homogeneous polycondensation impossible. As a result, the molecular weight does not increase, the transparency and mechanical strength of the obtained component C degrade, and its use in the resin composition of the present invention may cause a problem disadvantageously.

Examples of (ii) the polyalkylene glycol having a number average molecular weight of 200 to 3,000 include polyoxyethylene glycol, polyoxypropylene glycol, polyoxytetramethylene glycol, block or random copolymer of ethylene oxide and propylene oxide, block or random copolymer of ethylene oxide and tetrahydrofuran, and mixtures thereof. Out of these, polyoxytetramethylene glycol is particularly preferred from the viewpoints of the heat resistance, water resistance, mechanical strength, elastic recovery and applicability to the resin composition of the present invention of the obtained polyamide elastomer.

The dicarboxylic acid as the acid component is preferably a dicarboxylic acid having 6 to 20 carbon atoms, as exemplified by aliphatic dicarboxylic acids such as adipic acid, azelaic acid, sebacic acid and dodecanedioic acid, aromatic dicarboxylic acids such as terephthalic acid, isophthalic acid and diphenoxyethanedicarboxylic acid, and alicyclic dicarboxylic acids such as 1,4-cyclohexanedicabroxylic acid and 1,2-cyclohexyl-4,4'-dicarboxylic acid. Out of these, dicarboxylic acids such as azelaic acid, sebacic acid, terephthalic acid, isophthalic acid and 1,4-cyclohexanedicarboxylic acid are preferably used from the viewpoint of polymerizability and the physical properties of the polyamide elastomer.

The component C is obtained by mixing together a polyamide oligomer, an $\alpha,\omega$-dihydroxyhydrocarbon or a mixture of an $\alpha,\omega$-dihydroxyhydrocarbon and a polyoxyalkylene glycol, and a dicarboxylic acid having 6 to 20 carbon atoms to ensure that all the carboxyl groups become substantially equivalent to all the hydroxyl groups and that the weight radio of the above soft segment to the polyamide oligomer becomes 5/95 to 80/20, charging the mixture into a reactor whose inside has been fully substituted by nitrogen, and heating it at 200 to 280˚C in the presence of a small amount of a catalyst to carry out a reaction for 1 to 3 hours and then a polycondensation reaction under a reduced pressure of 133.3 Pa (1 mmHg) until the melt viscosity of the reaction product becomes not less than 5 Pa·s at 250˚C in accordance with the method described in JP-A 5-320336.

The weight ratio of the soft segment to the hard segment in the polyamide elastomer (component C) is preferably in the range of 5/95 to 80/20. When the proportion of the hard segment exceeds this range, the flexibility and low-temperature characteristics of the obtained polyamide elastomer are impaired and when the proportion falls below this range, the mechanical strength and melting point of the elastomer lower, whereby the impact resistance of the composition of the present invention may not be improved disadvantageously.

To produce the polyamide elastomer (component C), a polyamide oligomer, a glycol such as polyoxyalkylene glycol and a dicarboxylic acid must be polycondensed homogeneously without causing the separation of a coarse phase. Since a polyamide oligomer obtained by using a polymerization fatty acid and azelaic acid and/or sebacic acid as acid components and hexamethylenediamine as a diamine component has high compatibility with the polyoxyalkylene glycol and the α,ω-dihydroxyhydrocarbon, a complicated polymerization process does not need to be employed.

The component C may contain a phenoxy resin, an epoxy compound, a carbodiimide compound and a catalyst for promoting a reaction among these components to improve hydrolysis resistance and impact resistance.

The phenoxy resin which is advantageously used in the component C in the present invention is derived from epichlorohydrin and bisphenol A and has a number average molecular weight represented by the following formula (5) of 10,000 to 75,000.

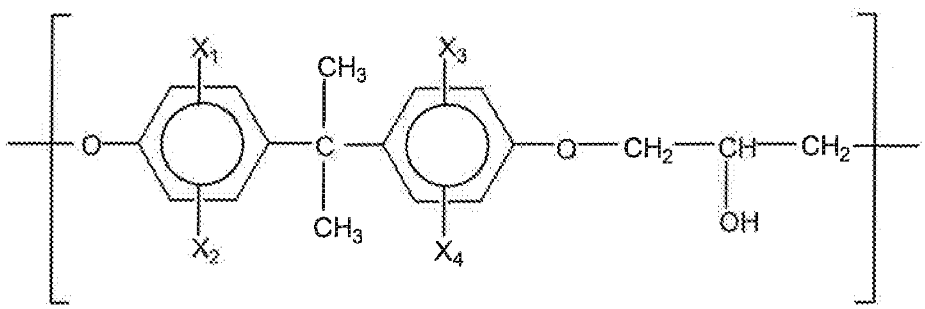

General formula (5)

In the above formula, $X_1$ to $X_4$ are each independently a hydrogen atom, lower alkyl group such as methyl group or ethyl group, or halogen atom such as chlorine or bromine.

The structure of the epoxy compound used to modify the component C is not particularly limited if it has at least one epoxy group in the molecule. More specifically, it is a glycidyl compound or a diglycidyl compound which will be described in the item for epoxy compound as the carboxyl group capping agent below. Specific examples of the glycidyl compound and the diglycidyl compound include methyl glycidyl ether, phenyl glycidyl ether, p-t-butylphenyl glycidyl ether, bisphenol A diglycidyl ether, neopentyl glycol diglycidyl ether and 1,6-hexanediol diglycidyl ether.

As the carbodiimide compound used to modify the component C are preferably used the following carbodiimide compounds. Out of these, di-O-toluyl carbodiimide, di-2,6-dimethylphenyl carbodiimide, poly(toluylcarbodiimide), poly (4,4'-biphenylmethanecarbodiimide), a high-molecular weight polymer of bis(2,6-diisopropylphenyl)carbodiimide and a high-molecular weight polymer of bis(2,4,6-triisopropylphenyl)carbodiimide are preferred.

Examples of the catalyst used to modify the component C include amine compounds, organic acids, phosphorus compounds, and the group I-a and II-a metal salts of the periodic table of a monocarboxylic acid or dicarboxylic acid having 10 or more carbon atoms. Trivalent phosphorus compounds such as tributyl phosphine and triphenyl phosphine are particularly preferred.

For the modification of the component C, 2 to 60 parts by weight of the phenoxy resin, 0.1 to 10 parts by weight of the epoxy compound and 0.01 to 5 parts by weight of the carbodiimide compound are preferably used based on 100 parts by weight of the component C. When the amount of the phenoxy resin is smaller than 2 parts by weight, its effect of improving the hydrolysis resistance of the polyether ester amide resin composition becomes unsatisfactory and when the amount is larger than 60 parts by weight, the impact resistance and flexibility of the composition degrade disadvantageously. When the amount of the epoxy compound is smaller than 0.1 part by weight, its effect of improving hydrolysis resistance becomes unsatisfactory and when the amount is larger than 10 parts by weight, fluidity at the time of melting deteriorates, thereby reducing moldability.

When the amount of the carbodiimide compound is smaller than 0.01 part by weight, the improvement of hydrolysis resistance becomes unsatisfactory and when the amount is larger than 5 parts by weight, moldability deteriorates or the obtained composition become opaque disadvantageously. The amount of the catalyst is preferably 0.01 to 2 parts by weight.

The content of the polyamide elastomer (component C) in the resin composition of the present invention is preferably 0.1 to 30 parts by weight, more preferably 0.1 to 10 parts by weight, much more preferably 0.5 to 7 parts by weight based on 100 parts by weight of the total of the components A and B.

Preferably, the resin composition of the present invention has a carbodiimide compound (component D) content of 0.001 to 5 wt% based on the total of the components A, B and C, a lactide content of 0 to 700 wtppm and a carboxyl

group concentration of 0 to 30 eq/ton.

(ester exchange inhibitor: component E)

The resin composition of the present invention preferably comprises 0.01 to 5 parts by weight of an ester exchange inhibitor (component E) based on 100 parts by weight of the total of the components A and B. The content of the component E is more preferably 0.01 to 1 part by weight, much more preferably 0.02 to 0.5 part by weight.

When the resin composition comprises the ester exchange inhibitor (component E), the melt viscosity stability of the resin composition is enhanced, the decomposition and molecular weight reduction at the time of molding of the resin are suppressed, and the moldability of the resin is improved, whereby melt molding can be carried out advantageously.

Examples of the ester exchange inhibitor (component E) include sodium dihydrogen phosphate, potassium acetate, trimethyl phosphate and phenylphosphonic acid. The above catalyst deactivators used in the production of the polylactic acid may be advantageously used. Orthophosphoric acids represented by the formula $xH_2O \cdot yP_2O_5$ and satisfying x/y = 3 are used from the viewpoint of catalyst deactivation ability. Polyphosphoric acids called "diphosphoric acid, triphosphoric acid, tetraphosphoric acid and pentaphosphoric acid" according to the degree of condensation and satisfying 2 > x/y > 1 and mixtures thereof; metaphosphoric acids satisfying x/y = 1, particularly trimetaphosphoric acid and tetrametaphosphoric acid; ultraphosphoric acids having a net-like structure and part of a phosphorus pentaoxide structure and satisfying 1 > x/y > 0 (may be collectively referred to as "metaphosphoric acid-based compounds"); and acidic salts and partial ester phosphorus oxoacids of a monohydric or polyhydric alcohol or a polyalkylene glycol of these acids may also be used. Out of these, cyclic sodium metaphosphate, ultra-region sodium metaphosphate and DHPA are preferably used.

(crystal nucleating agent: component F)

The resin composition of the present invention preferably comprises 0.01 to 10 parts by weight of a crystal nucleating agent (component F) based on 100 parts by weight of the total of the components A and B in order to improve moldability and heat deformation temperature. The content of the component F is more preferably 0.01 to 5 parts by weight, much more preferably 0.02 to 1 part by weight. When the component F is used within the above range, the molding speed of the resin composition can be increased, crystallinity is enhanced, and the heat resistance and heat deformation temperature of a molded article are improved advantageously.

Conventionally known crystal nucleating agents may be used, and both inorganic crystal nucleating agents and organic crystal nucleating agents may be used.

The inorganic nucleating agents include calcium silicate, talc, kaolinite, montmorillonite, synthetic mica, calcium sulfide, boron nitride, barium sulfate, ammonium oxide, neodymium oxide and metal salts of a phenyl phosphonate. These inorganic crystal nucleating agents are preferably modified by an organic material to improve dispersibility into the composition.

The organic crystal nucleating agents include organic carboxylic acid metal salts such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, potassium dibenzoate, lithium dibenzoate, sodium β-naphthalate and sodium cyclohexane carboxylate. Organic sulfonic acid salts such as sodium p-toluene sulfonate and sodium sulfoisophthalate are also included. Carboxylic acid amides such as stearic acid amide, ethylene bislauric acid amide, palmitic acid amide, hydroxystearic acid amide, erucic acid amide and trimesic acid tris(t-butyLamide) are further included. Benzilidene sorbitol and derivatives thereof, phosphorus compound metal salts such as sodium-2,2'-methylenebis(4,6-di-t-butylphenyl)phosphate, and 2,2-methylbis(4,6-di-t-butylphenyl)sodium are still further included.

The inorganic nucleating agents are more preferred than the organic nucleating agents from the viewpoint of the stability at the time of melting of the resin containing the nucleating agent, and the particle diameter of the nucleating agent is preferably small. For example, when the nucleating agent has an average primary particle diameter of 0.2 to 0.05 μm, it is properly dispersed into the resin composition with the result that the heat resistance of the resin composition becomes high.

Out of the inorganic nucleating agents, calcium silicate is preferably added. The calcium silicate may include hexagonal crystals, and the amount, of the calcium silicate is preferably 0.01 to 1 wt%, more preferably 0.05 to 0.5 wt% based on the resin composition. When the amount of the nucleating agent is too large, the appearance becomes worse and when the amount is too small, no special effect is obtained disadvantageously.

(antioxidant)

The resin composition of the present invention preferably comprises 0.01 to 5 parts by weight of an antioxidant based on 100 parts by weight of the total of the components A and B to improve the oxidation stability of the composition and suppress the decomposition deterioration at the time of melt molding of the resin composition so as to improve the residence stability of the resin composition. The content of the antioxidant is more preferably 0.01 to 2 parts by weight, much more preferably 0.02 to 0.5 part by weight. When the antioxidant is used within the above range, the oxidation stability of the resin composition can be improved, and the coloring, deterioration at the time of melt molding of the resin composition and the oxidation deterioration of a molded article can be suppressed.

The antioxidant is selected from a hindered phenol-based compound, a hindered amine-based compound, a phosphite-based compound and a thioether-based compound.

Examples of the hindered phenol-based compound used in the present invention include n-octadecyl 3-(3',5'-di-t-butyl-4'-hydroxyphenyl)-propionate, n-octadecyl 3-(3'-methyl-5'-t-butyl-4'-hydroxyphenyl)-propionate, n-tetradecyl 3-(3',5'-di-t-butyl-4'-hydroxyphenyl)-propionate, 1,6-hexanediol bis[3-(3,5-di-t-butyl-4-hydroxphenyl)-propionate], 1,4-butanediol bis[3-(3,5-di-t-butyl-4-hydroxyphenyl)-propionate], 2,2'-methylene-bis(4-methyl-t-butylphenol), triethylene glycol bis([3-(3-t-butyl-5-methyl-4-hydroxyphenyl)-propionate], tetrakis[methylene-3-(3',5'-di-t-butyl-4-hydroxyphenyl) propionate]methane, 3,9-bis[2-{3-(3-t-butyl-4-hydroxy-5-methylphenyl) propionyloxy}-1,1-dimethylethyl]2,4,8,10-tetraoxaspiro(5,5)undecane, N,N'-bis-3-(3',5'-di-t-butyl-4'-hydroxyphenyl) propionylhexamethylenediamine, N,N'-tetramethylene-bis[3-(3'-methyl-5'-t-butyl-4'-hydroxyphenyl)propionyl]diamine, N,N'-bis[3-(3,5-di-t-butyl-4-hydroxyphenyl)-propionyl] hydrazine, N-salicyloyl-N'-salicylidenehydrazine, 3-(N-salicyloyl)amino-1,2,4-triazole and N,N'-bis[2-{3-(3,5-di-t-butyl-4-hydroxyphenyl) propionyloxy}ethyl]oxyamide.

Triethylene glycol bis[3-(3-t-butyl-5-methyl-4-hydroxyphenyl)-propionate] and tetrakis[methylene-3-(3',5'-di-t-butyl-4-hydroxyphenyl) propionate]methane are preferred.

The phosphite-based compound is preferably a compound having at least one P-O bond attached to an aromatic group. Examples of the phosphite-based compound include tris(2,6-di-t-butylphenyl)phosphite, tetrakis(2,6-di-t-butylphenyl)4,4'-biphenylenephosphite, bis(2,6-di-t-butyl-4-methylphenyl)pentaerythritol-diphosphite, 2,2-methylenebis(4,6-di-t-butylphenyl)octylphosphite, 4,4''-butylidene-bis(3-methyl-6-t-butylphenyl-ditridecyl)phosphite, 1,1,3-tris(2-methyl-4-ditridecylphosphite-5-t-butylphenyl)butane, tris(mixed mono- and di-nonylphenyl)phosphite and 4,4'-isopropylidenebis (phenyl-dialkylphosphite). Out of these, tris(2,6-di-t-butylphenyl)phosphite, 2,2-methylenebis(4,6-di-t-butylphenyl)octylphosphite, bis(2,6-di-t-butyl-4-methylphenyl)pentaerythritol-diphosphite and tetraphenyl-4,4'-biphenylene phosphite are preferably used.

Examples of the thioether-based compound include dilauryl thiodipropionate, ditridecyl thiodipropionate, dimyristyl thiodipropionate, distearyl thiodipropionate, pentaerythritol tetrakis(3-laurylthiopropionate), pentaerythritol tetrakis (3-dodecylthiopropionate), pentaerythritol tetrakis(3-octadecylthiopropionate), pentaerythritol tetrakis(3-myristylthiopropionate) and pentaerythritol tetrakis(3-stearylthiopropionate). They may be used alone or in combination of two or more. The antioxidant may be used in an amount of preferably 0.0001 to 5 parts by weight, more preferably 0.0005 to 1 part by weight, much more preferably 0.001 to 0.5 part by weight based on 100 parts by weight of the total of the components A and B.

Although the resin composition of the present invention may be used as it is, it may optionally comprise known additives selected from the group consisting of a release agent, surface lubricating agent, flame retardant, filler, UV absorbent, plasticizer, antistatic agent, elastomer, rubber reinforced styrene-based resin, polyethylene terephthalate and polycarbonate in limits not prejudicial to the object of the present invention.

(release agent)

The resin composition of the present invention preferably comprises a release agent. A release agent which is used for ordinary thermoplastic resins may be used in the present invention. Examples of the release agent include fatty acids, fatty acid metal salts, oxy fatty acids, paraffins, low-molecular weight polyolefins, fatty acid amides, alkylenebis fatty acid amides, aliphatic ketones, fatty acid partially saponified esters, fatty acid lower alcohol esters, fatty acid polyhydric alcohol esters, fatty acid higher alcohol esters, fatty acid polyhydric alcohol partial esters, fatty acid polyglycol esters and modified silicones. A resin composition and a molded article having excellent mechanical properties, moldability and heat resistance can be obtained by using the release agent.

The fatty acids preferably have 6 to 40 carbon atoms, as exemplified by oleic acid, stearic acid, lauric acid, hydroxystearic acid, behenic acid, arachidonic acid, linoleic acid, linolenic acid, recinoleic acid, palmitic acid, montanic acid and mixtures thereof. The fatty acid metal slats are preferably alkali (earth) metal salts of a fatty acid having 6 to 40 carbon atoms, as exemplified by calcium stearate, sodium montanate and calcium montanate. The oxy fatty acids include 1,2-oxystearic acid. The fatty acid esters include stearic acid esters, oleic acid esters, linoleic acid esters, linolenic acid esters, adipic acid esters, behenic acid esters, arachidonic acid esters, montanic acid esters and isostearic acid

esters. The fatty acid partially saponified esters include montanic acid partially saponified esters.

The paraffins preferably have 18 or more carbon atoms, as exemplified by liquid paraffin, natural paraffin, microcrystalline wax and petrolactam. The low-molecular weight polyolefins preferably have a molecular weight of 5,000 or less, as exemplified by polyethylene wax, maleic acid modified polyethylene wax, oxide type polyethylene wax, chlorinated polyethylene wax and polypropylene wax.

The fatty acid amides preferably have 6 or more carbon atoms, as exemplified by aleinic acid amide, erucic acid amide and behenic acid amide. The alkylenebis fatty acid amides preferably have 6 or more carbon atoms, as exemplified by methylenebis stearic acid amide, ethylenebis stearic acid amide and N,N-bis(2-hydroxyethyl)stearic acid amide. The aliphatic ketones preferably have 6 or more carbon atoms, as exemplified by higher aliphatic ketones. The fatty acid esters preferably have 6 or more carbon atoms, as exemplified by ethyl stearate, butyl stearate, ethyl behenate, stearyl stearate, stearyl oleate and rice wax.

The fatty acid polyhydric alcohol esters include glycerol tristearate, glycol distearate, glycerol monostearate, pentaerythritol tetrastearate, pentaerythritol tristearate, pentaerythritol dimyristate, pentaerythritol monostearate, pentaerythritol adipate stearate and sorbitan monobehenate. The fatty acid polyglycol esters include polyethylene glycol fatty acid esters and polypropylene glycol fatty acid esters. The modified silicones include polyether modified silicone, high fatty acid alkoxy modified silicone, higher fatty acid-containing silicone, higher fatty acid ester modified silicone, methacryl modified silicone and fluorine modified silicone.

Vegetable waxes such as carnauba wax and rice wax, animal waxes such as bees wax and lanolin, mineral-based waxes such as montan wax and montanic acid partially saponified ester wax, petroleum-based waxes such as paraffin wax and polyethylene wax, and fat-based waxes such as castor oil and derivatives thereof, and fatty acids and derivatives thereof are also included.

Out of these, fatty acids, fatty acid metal salts, oxy fatty acids, fatty acid esters, fatty acid partially saponified esters, paraffins, low-molecular weight polyolefins, fatty acid amides and alkylenebis fatty acid amides are preferred. Fatty acid partially saponified esters and alkylenebis fatty acid amides are more preferred. Montanic acid esters, montanic acid partially saponified ester wax, polyethylene wax, acid value polyethylene wax, sorbitan fatty acid esters, erucic acid amide and ethylenebis stearic acid amide are particularly preferably used because they are excellent in the effect of improving the molding cycle.

Montanic acid partially saponified ester wax and ethylenebis stearic acid amide are particularly preferred. In the present invention, the release agents may be used alone or in combination of two or more. The content of the release agent is preferably 0.01 to 3 parts by weight, more preferably 0.03 to 2 parts by weight based on 100 parts by weight of the total of the components A and B.

(surface lubricating agent)

The resin composition of the present invention may comprise a surface lubricating agent. Conventionally known surface lubricating agents may be used such as silicone-based compounds, fluorine-based surfactants and organic surfactants.

(flame retardant)

The resin composition of the present invention may comprise a flame retardant. The flame retardant is selected from a bromine-based flame retardant, a chlorine-based flame retardant, a phosphorus-based flame retardant, a nitrogen compound-based flame retardant, a silicone-based flame retardant and other inorganic flame retardants.

Examples of the bromine-based flame retardant include decabromodiphenyl oxide, octabromodiphenyl oxide, tetrabromodiphenyl oxide, tetrabromophthalic anhydride, hexabromocyclododecane, bis(2,4,6-tribromophenoxy) ethane, ethylenebis tetrabromophthalimide, hexabromobenzene, 1,1-sulfonyl[3,5-dibromo-4-(2,3-dibrompropoxy)]benzene, polydibromophenylene oxide, tetrabromobisphenol S, tris(2,3-dibromopropyl-1)isocyanurate, tribromophenol, tribromophenyl allyl ether, tribromoneopentyl alcohol, brominated polystyrene, brominated polyethylene, tetrabromobisphenol A, tetrabromobisphenol A derivative, tetrabromobisphenol A-epoxy oligomer or polymer, tetrabromobisphenol A-carbonate oligomer or polymer, brominated epoxy resin such as brominated phenol novolak epoxy, tetrabromobisphenol A-bis(2-hydroxydiethyl ether), tetrabromobisphenol A-bis(2,3-dibromopropyl ether), tetrabromobisphenol A-bis (allyl ether), tetrabromocyclooctane, ethylenebis pentabromodiphenyl, tris(tribromoneopentyl)phosphate, poly(pentabromobenzyl polyacrylate), octabromotrimethylphenyl inane, dibromoneopentyl glycol, pentabromobenzyl polyacrylate, dibromocresyl glycidyl ether and N,N'-ethylene-bis-tetrabrompophthalimide. Out of these, tetrabromobisphenol A-epoxy oligomer, tetrabromobisphenol A-carbonate oligomer and brominated epoxy resin are preferred.

Examples of the chlorine-based flame retardant include chlorinated paraffin, chlorinated polyethylene, perchlorocyclopentadecane and tetrachlorophthalic anhydride.

Examples of the phosphorus-based flame retardant include organic phosphorus-based compounds such as

phosphoric acid esters, condensation phosphoric acid esters and polyphosphoric acid salts, and red phosphorus.

(filler)

The resin composition of the present invention may comprise a filler. Examples of the filler include silica, mica, calcium carbonate, glass fibers, glass beads, barium sulfate, magnesium hydroxide, wollastonite, calcium silicate fibers, carbon fibers, magnesium oxysulfate fibers, potassium titanate fibers, titanium oxide, calcium sulfite, white carbon, clay, montmorillonite, calcium sulfate, talc and flakes.

The talc may be surface treated with a silage-basted coupling agent or titanate-based coupling agent. The average particle diameter of talc is preferably 0.1 to 50 μm, more preferably 0.5 to 10 μm.

The flakes include mica, glass flakes and metal foils.

(stabilizer)

The resin composition of the present invention may comprise a stabilizer. Examples of the stabilizer include metal soap-based stabilizers such as lithium stearate, magnesium stearate, calcium laureate, calcium ricinoleate, calcium stearate, barium laurate, barium ricinoleate, barium stearate, zinc laurate, zinc ricinoleate and zinc stearate. Laurate-, maleate- and mercapto-based organic tin stabilizers, and lead-based stabilizers such as lead stearate and tribasic lead sulfate are also included. Epoxy compounds such as epoxylated vegetable oil are also included. Phosphite compounds including compounds enumerated for the above ester exchange inhibitor, such as allyl allyl phosphites and trialkyl phosphites are further included. β-diketone compounds such as dibenzoyl methane and dehydroacetic acid, polyols such as sorbitol, mannitol and pentaerythritol, hydrotalcites, zeolites, benzotriazole-based ultraviolet absorbents, benzophenone-based ultraviolet absorbents, salicylate-based ultraviolet absorbents, cyanoacrylate-based ultraviolet absorbents, anilide oxalate-based ultraviolet absorbents and hindered amine-based optical stabilizers are still further included.

(plasticizer)

The resin composition of the present invention may comprise a plasticizer. The plasticizer is selected from a polyester-based plasticizer, a glycerin-based plasticizer, a polycarboxylic acid ester-based plasticizer, a phosphoric acid ester-based plasticizer, a polyalkylene glycol-based plasticizer and an epoxy-based plasticizer.

Examples of the polyester-based plasticizer include polyesters comprising a dicarboxylic acid component such as adipic acid, sebacic acid, terephthalic acid, isophthalic acid, naphthalenedicarboxylic acid or diphenyldicarboxylic acid and a diol component such as propylene glycol, 1,3-butanediol, 1,4-butanediol, 1,7-hexanediol, ethylene glycol or diethylene glycol, and polyesters comprising a hydroxycarboxylic acid such as polycaprolactone.

Examples of the glycerin-based plasticizer include glycerin monoacetomonolaurate, glycerin diacetomonolaurate, glycerin diacetomonooleate and glycerin monoacetomonomontanate.

Examples of the polycarboxylic acid ester-based plasticizer include phthalic acid esters such as dimethyl phthalate, diethyl phthalate, dibutyl phthalate, dioctyl phthalate and diheptyl phthalate, trimellitic acid esters such as tributyl trimellitate, trioctyl trimellitate and trihexyl trimellitate, adipic acid esters such as diisodecyl adipate, citric acid esters such as tributyl acetylcitrate, azelaic acid esters such as di-2-ethylhexyl azelate, sebacic acid esters such as di-2-ethylhexyl sebacate, bis(methyldiglycol)succinate, methyldiglycol butyldiglycol succinate, propyldiglycol butyldiglycol succinate, methyldiglycol butyldiglycol succinate, benzyl methyldiglycol succinate, benzyl butyldiglycol succinate, methyldiglycol butyldiglycol adipate, benzyl methyldiglycol adipate, benzyl butyldiglycol adipate, methoxycarbonyl methyldibutyl citrate, ethoxycarbonyl methyldibutyl citrate, butoxycarbonyl methyldibutyl citrate, dimethoxycarbonyl methylmonobutyl citrate, diethoxycarbonyl methylmonobutyl citrate and dibutoxycarbonyl methylmonobutyl citrate.

Examples of the phosphoric acid ester-based plasticizer include tributyl phosphate, tri-2-ethylhexyl phosphate, trioctyl phosphate, triphenyl phosphate, diphenyl-2-ethylhexyl phosphate and tricresyl phosphate.

Examples of the polyalkylene glycol-based plasticizer include polyalkylene glycols such as polyethylene glycol, polypropylene glycol, poly (ethylene oxide.propylene oxide) block and/or random copolymer(s), polytetramethylene glycol, ethylene oxide addition polymer of a bisphenol, propylene oxide addition polymer of a bisphenol and tetrahydrofuran addition polymer of a bisphenol, and terminal capped compounds such as terminal epoxy modified compounds, terminal ester modified compounds and terminal ether modified compounds thereof.

Examples of the epoxy-based plasticizer include epoxytriglyceride comprising an alkyl epoxystearate and soy oil and an epoxy resin obtained mainly from bisphenol A and epichlorohydrin.

Benzoic acid esters of an aliphatic polyol such as neopentyl glycol dibenzoate, diethylene glycol dibenzoate and triethylene glycol di-2-ethylbutyrate, fatty acid amides such as stearic acid amide, aliphatic carboxylic acid esters such as butyl oleate, and oxyacid esters such as methyl acetylricinoleate and butyl acetylricinoleate, pentaerythritol,

sorbitol, polyacrylic acid esters, silicone oil and paraffins may also be used.

(antistatic agent)

The resin composition of the present invention may comprise an antistatic agent. The antistatic agent is selected from a low-molecular weight antistatic agent such as anionic antistatic agent, cationic antistatic agent, nonionic antistatic agent or amphoteric antistatic agent, and a high-molecular weight antistatic agent.

Preferred examples of the anionic antistatic agent include sodium alkyl sulfonates, sodium alkylbenzene sulfonates and alkyl phosphates. The alkyl group is preferably a linear alkyl group having 4 to 20 carbon atoms.

Preferred examples of the cationic antistatic agent include phosphonium alkyl sulfonates, phosphonium alkylbenzene sulfonates and quaternary ammonium salt compounds. The alkyl group is preferably a linear alkyl group having 4 to 20 carbon atoms.

Preferred examples of the nonionic antistatic agent include polyoxyethylene derivatives, polyhydric alcohol derivatives and alkyl ethanol amines. Polyethylene glycol having a number average molecular weight of 500 to 100,000 is preferably used as the polyoxyethylene derivative.

Preferred examples of the amphoteric antistatic agents include alkyl betains and sulfobetain derivatives. Preferred examples of the high-molecular weight antistatic agent include polyethylene glycol methacrylate copolymer, polyether amide, polyether ester amide, polyether amide imide, polyalkylene oxide copolymer, polyethylene oxide-epichlorohydrin copolymer and polyether ester. These antistatic agents may be used in combination.

(elastomer)

The resin composition of the present invention has high impact resistance and may further optionally comprise an elastomer except for the component C. Examples of the elastomer include a polyester elastomer, ethylene-propylene copolymer, ethylene-propylene-nonconjugated diene copolymer, ethylene-butene-1 copolymer, acrylic rubber, ethylene-acrylic acid copolymer and alkali metal salts thereof (so-called "monomers"), ethylene-glycidyl (meth)acrylate copolymer, ethylene-acrylic acid alkyl ester copolymer (such as ethylene-ethyl acrylate copolymer and ethylene-butyl acrylate copolymer), acid modified ethylene-propylene copolymer, diene rubber (such as polybutadiene, polyisoprene and polychloroprene), copolymer of a diene and a vinyl monomer (such as styrene-butadiene random copolymer, styrene-butadiene block copolymer, styrene-butadiene-styrene block copolymer, styrene-isoprene random copolymer, styrene-isoprene block copolymer, styrene-isoprene-styrene block copolymer, graft copolymer of polybutadiene and styrene, and butadiene-acrylonitrile copolymer), polyisobutylene, copolymer of isobutylene and butadiene or isoprene, natural rubber, Thiokol rubber, polysulfide rubber, polyurethane rubber, polyether rubber and epichlorohydrin rubber.

Any known rubber reinforced styrene-based resin may be used, as exemplified by impact-resistant polystyrene, ABS resin, AAS resin (acrylonitrile-acrylic rubber-styrene copolymer) and AES resin (acrylonitrile-ethylene propylene rubber-styrene copolymer).

These additives may be used alone or in combination according to properties to be provided. For example, a stabilizer, a release agent and a filler may be added in combination.

(production of resin composition)

The resin composition of the present invention can be produced by mixing together the aromatic polyester (component A), the polylactic acid (component B) and the modifier (component C) and optionally other components. These components can be mixed together by any method such as melt blending or solution blending if they can be mixed together uniformly. They are preferably mixed together in a molten state in a kneader, single-screw kneader, double-screw kneader or melt reactor.

The kneading temperature may be a temperature at which the resin is molten, preferably 230 to 280˚C, more preferably 230 to 260˚C when the stability of the resin is taken into consideration. Use of a compatibilizing agent at the time of kneading is preferred because the homogeneity of the resin can be improved and the kneading temperature can be reduced.

Examples of the compatibilizing agent include inorganic fillers, polymer compounds obtained by graft- or copolymerizing a glycidyl compound or acid anhydride, graft polymers having an aromatic polycarbonate chain and organic metal compounds, all of which may be used alone or in combination of two or more.

The amount of the compatibilizing agent is preferably 15 to 1 wt%, more preferably 10 to 1 wt% based on the polylactic acid (component B). When the amount of the compatibilizing agent is smaller than 1 wt%, the effect of the compatibilizing agent is small and when the amount is larger than 15 wt%, mechanical properties deteriorate disadvantageously.

(molded article)

Various molded articles and sheets can be obtained by molding the resin composition of the present invention. Commonly known melt molding techniques such as one in which the resin composition is molded after it is molten and one in which, it is compressed and welded may be employed. For examples, injection molding, extrusion molding, blow molding, foam molding and press molding may be advantageously used. Since the resin obtained in the present invention has excellent moldability and impact resistance, when the crystallinity of a molded article thereof is high, the molded article has a low mold shrinkage factor and excellent heat resistance. Especially a molded article having a crystallinity of more than 40 % is preferred because it has excellent heat resistance.

Examples

The following examples are provided for the purpose of further illustrating the present invention but are in no way to be taken as limiting. Physical properties were measured by the following methods.

(1) Molecular weight

The weight average molecular weight and number average molecular weight of a polymer were measured by gel permeation chromatography (GPC) and calculated in terms of standard polystyrene.
GPA measurement instruments are given below. Detector: RID-6A differential refractometer of Shimadzu Corporation
Column: TSKgelG3000HXL, TSKgelG4000HXL and TSKgelG5000HXL and TSKguardcokumnHXL-L of Tosoh Corporation were connected in series, or TSKGelG2000HXL, TSKgelG3000HXL and TSKguardcokumnHXL-L of Tosoh Corporation were connected in series.
A chloroform eluant was used, and 10 μl of a sample having a concentration of 1 mg/ml (chloroform containing 1 % of hexafluoroisopropanol) was injected at a temperature of 40°C and a flow rate of 1.0 ml/min to calculate.

(2) Intrinsic viscosity

0.5 g of the sample was weighed and dissolved in 20 ml of E-sol, and the resulting solution was measured with an Ubbellohde viscometer at 25°C.

(3) lactide content

The sample was dissolved in hexafluoroisopropanol to determine the lactide content of the sample by $^{13}C$ NMR.

(4) carbodiimide content

The carbodiimide content was measured by comparison between the characteristic absorption of the resin and the characteristic absorption of the carbodiimide with the Magma-750 Fourier transform infrared spectrophotometer of Nireco Thermo Nicorei Co., Ltd.

(5) carboxyl group concentration

The sample was dissolved in purified o-cresol and titrated with an ethanol solution of 0.05 N potassium hydroxide using Bromocresol Blue as an indicator in a nitrogen gas stream.

(6) impact strength

This was measured with an Izod impact tester in accordance with JIS-K7110 (ISO180).

(7) stereo crystallization ratio (Cr)

The stereocomplex crystallizing ratio (Cr) was obtained based on the following equation from the total $\Sigma I_{SCi}$ of the integral intensities of diffraction peaks derived from a stereocomplex crystal which appeared at $2\theta$ = 12.0°, 20.7° and 24.0° and the integral intensity $I_{HM}$ of a diffraction peak derived from a homocrystal which appeared at $2\theta$ = 16.5° in a diffraction intensity profile in the equator direction obtained with the ROTA FLEX RU200B type X-ray diffraction apparatus of Rikagaku Denki Co., Ltd.

Measurement conditions
X-ray source: Cu-Kα line (confocal mirror)
Output: 45 kV x 70 mA
Slit: 1 mm to 0.8 mm in diameter
Camera length: 120 mm
Integral time; 10 minutes

$$Cr\ (\%) = [\Sigma I_{SCi}/(\Sigma I_{SCi} + I_{HM})] \times 100 \quad (1)$$

($\Sigma I_{SCi} = I_{SC1} + I_{SC2} + I_{SC3}$, and $I_{SCi}$ (i = 1 to 3) is the integral intensity of a diffraction peak at 2θ = 12.0˚, 20.7˚ or 24.0˚)

(8) stereo crystal rate (S), crystal melting temperature

The stereo crystal rate (S) was obtained based on the following equation (2) by measuring crystal melting temperature and crystal melting enthalpy with DSC (TA-2920 of TA Instrument Co., Ltd.).

$$S\ (\%) = [(\Delta Hms/\Delta Hms^0)/(\Delta Hmh/\Delta Hmh^0 + \Delta Hms/\Delta Hms^0)] \times 100 \quad (2)$$

($\Delta Hms^0$ = 203.4 J/g, $\Delta Hmh^0$ = 142 J/g, ΔHms = melting enthalpy of complex-phase crystal and ΔHmh = melting enthalpy of homocrystal)

(9) chemical resistance of molded article

After the molded article was immersed in the following chemicals and kept at 25˚C for one day, its appearance and weight change were checked (used chemicals; toluene, dichloromethane, THF, acetone, ethanol, 20 % sulfuric acid, 10 % NaOH). No noticeable shape changes were observed in all the compositions of Examples, and the largest weight change was 2 to 3 % which is negligible. Therefore, as the chemical resistances of the molded articles were evaluated as excellent, the results of the following examples are not given.

(10) hydrolysis resistance

The hydrolysis resistance was judged as acceptable (○) when the sample had a melt viscosity retention of 80 % or more after it was treated in a pressure cooker at 120˚C and 100 %RH for 2 hours, as excellent (◎) when it had a melt viscosity retention of 85 % or more and as unacceptable (X) when it had a melt viscosity retention of less than 80 %. The melt viscosity was measured at 260˚C with the Capillograph 10 of Toyo Seiki Co., Ltd. in accordance with JIS K-7199 (ISO11443).

(11) melt stability

The melt stability was judged as acceptable (○) when the melt viscosity retention was 80 % or more after the sample was treated at 260˚C for 10 minutes. The melt stability is a parameter for the stability of a resin which stays in the apparatus when it is molded. When the melt stability was higher than 80 %, it was judged that the sample could be molded without a problem. The melt stability was judged as excellent (◎) when the retention was higher than 85 % and as unacceptable (×) when the retention was lower than 80 %. The melt viscosity was measured at 260˚C with the Capillograph 10 of Toyo Seiki Co., Ltd. in accordance with JIS K-7199 (ISO11443).

(12) Moisture absorptivity

The molded article was dried in vacuum at 120˚C for 5 hours and then left in a 25˚ and 60 %RH atmosphere for 1 week to obtain, its weight increase so as to calculate the amount of its moisture absorption.

(13) Flexural strength, flexural modulus

The flexural strength and the flexural modulus were measured in accordance with JIS-K7017 (ISO/FDIS 14125).

Production Example 1-1 (production of PLEA1)

0.005 part by weight of tin octylate was added to and reacted with 100 parts by weight of L-lactide (produced by Musashino Kagaku Kenkyusho Co., Ltd., optical purity of 100 %) at 180˚C for 2 hours in a nitrogen atmosphere by means of a reactor having a stirring blade. Thereafter, phosphoric acid was added in an amount 1.2 times the equivalent of tin octylate, the residual lactide was removed at 13.3 Pa, and the obtained product was formed into a chip to obtain poly(L-lacticacid) (PLLA1). The obtained PLLA1 had a weight average molecular weight of 152, 000, a glass transition point (Tg) of 63˚C, a melting point (Tm) of 180˚C, a carboxyl group content of 14 eq/ton and a lactide content of 350 wtppm.

Production Example 1-2 (production of PLLA2)

Poly(L-lactic acid) (PLLA2) was produced in the same manner as in Production Example 1-1 except that the residual lactide was removed at 1.3 kPa. The obtained PLLA2 had a weight average molecular weight of 152,000, a glass transition point (Tg) of 63˚C, a melting point (Tm) of 180˚C, a carboxyl group content of 14 eq/ton and a lactide content of 1,600 wtppm.

Production Example 1-3 (production of PDLA1)

0.005 part by weight of tin octylate was added to and reacted with 100 parts by weight of D-lactide (produced by Musashino Kagaku Kenkyusho Co., Ltd., optical purity of 100 %) at 180˚C for 2 hours in a nitrogen atmosphere by means of a reactor having a stirring blade. Thereafter, phosphoric acid was added in an amount 1.2 times the equivalent of tin octylate, the residual lactide was removed at 13.3 Pa, and the obtained product was formed into a chip to obtain poly(D-lactic acid) (PDLA1). The obtained PDLA1 had a weight average molecular weight of 151,000, a glass transition point (Tg) of 63˚C, a melting point (Tm) of 180˚C, a carboxyl group content of 15 eq/ton and a lactide content of 450 wtppm.

Production Example 1-4 (production of PDLA2)

Poly(D-lactic acid) (PDLA2) was produced in the same manner as in Production Example 1-3 except that the residual lactide was removed at 1.3 kPa. The obtained PDLA2 had a weight average molecular weight of 151,000, a glass transition point (Tg) of 63˚C, a melting point (Tm) of 180˚C, a carboxyl group content of 15 eq/ton and a lactide content of 1,500 wtppm.

Table 1

| Production Example | | 1-1 | 1-2 | 1-3 | 1-4 |
|---|---|---|---|---|---|
| | unit | PLLA1 | PLLA2 | PDLA1 | PDLA2 |
| Tm | ˚C | 180 | 180 | 180 | 180 |
| Tg | ˚C | 63 | 63 | 63 | 63 |
| Mw | $\times 10^4$ | 15.2 | 15.2 | 15.1 | 15.1 |
| Carboxyl group concentration | eq/ton | 14 | 14 | 15 | 15 |
| Lactide | wtppm | 350 | 1600 | 450 | 1500 |

Production Example 2-1

100 parts by weight of the poly (L-lactic acid) (PLLA1) obtained in Production Example 1-1, 0.3 part by weight of a phosphoric acid metal salt (Adekastab (registered trademark) NA-11 of ADEKA Corporation (formerly Asahi Denka Kogyo K.K.)) and 0.3 part by weight of a crystal nucleating agent (F1; calcium silicate) as shown in Table 2 were supplied from the first feed port of a double-screw kneader and melt kneaded together at a cylinder temperature of 230˚C and a vent pressure of 13.3 Pa while air was evacuated. Further, 1 part by weight of Carbodilite (registered trademark) LA-1 of Nisshinbo Industries, Inc. based on 100 parts by weight of PLLA1 was supplied as a carbodiimide (component D) from the second feed port and melt extruded into a strand in a water tank at a cylinder temperature of 230˚C, and the strand was cut into a chip with a chip cutter to obtain polylactic acid PLLA11 resin. The physical properties of the obtained resin are shown in Table 2-1.

Production Example 2-2

The operation of Production Example 2-1 was repeated except that the poly(D-lactic acid) (PDLA1) obtained in Production Example 1-3 was used in place of the poly(L-lactic acid) (PLLA1) obtained in Production Example 1-1 to obtain PDLA11 resin. The physical properties of the obtained resin are shown in Table 2-1.

Table 2-1

| Production Example | | 2-1 | 2-2 |
|---|---|---|---|
| Polylactic acid composition | Name | PLLA11 | PDLA11 |
| Poly(L-lactic acid) | Type | PLLA1 | - |
| Poly(D-lactic acid) | Type | - | PDLA1 |
| Phosphoric acid metal salt | Type | NA-11 | NA-11 |
| Carbodiimide (D) | Type | LA-1 | LA-1 |
| Crystal nucleating agent (F) | Type | F1 | F1 |
| Physical properties | | | |
| Weight average molecular weight (Mw) | ($\times 10^4$) | 14.5 | 14.6 |
| Lactide content | (wtppm) | 60 | 62 |
| Carboxyl group concentration | (eq/ton) | 1 | |
| Stereo crystal rate (S) | (%) | 0 | 0 |
| Stereo crystallization ratio (CR) | (%) | 0 | 0 |
| Melting point | (°C) | 180 | 180 |

Phosphoric acid metal salt (NA-11): Adecastab (registered trademark) NA-11 of ADEKA Corporation
Phosphoric acid metal salt (NA-71): Adecastab (registered trademark) NA-71 of ADEKA Corporation
Carbodiimide (LA-1): Carbodilite (registered trademark) LA-1 of Nisshinbo Industries, Inc.
Nucleating agent (F1): calcium silicate
Nucleating agent (F2): talc

Production Examples 2-3 to 2-8

50 parts by weight of the poly(L-lactic acid) and 50 parts by weight of the poly(D-lactic acid) obtained in Production Examples 1-1 to 1-4, 0.3 part by weight of a phosphoric acid metal salt (Adecastab (registered trademark) NA-11 or NA-71 of ADEKA Corporation (formerly Asahi Denka Kogyo K.K.)) and 0.3 part by weight of a crystal nucleating agent (F1; calcium silicate) or 0.5 part by weight of a crystal nucleating agent (F2; talc) were supplied from the first feed port of a double-screw kneader and melt kneaded together at a cylinder temperature of 230°C. Further, 1 part by weight of the Carbodilite (registered trademark) LA-1 of Nisshinbo Industries, Inc. based on 100 parts by weight of the total of the poly(L-lactic acid) and the poly(D-lactic acid) was supplied as a carbodiimide (component D) from the second feed port and melt extruded into a strand in a water tank at a vent pressure of 13.3 Pa while air was evacuated (only in a nitrogen atmosphere without vacuum degasification in Production Examples 2 - 4 and 2-5), and the strand was cut into a chip with a chip cutter to obtain scPLA1 to scPLA4 resins (scPLA12 and scPLA13 resins in Production Examples 2-4 and 2-5). The physical properties of the obtained resins are shown in Table 2-2.

Table 2-2

| Production Example | | 2-3 | 2-4 | 2-5 | 2-6 | 2-7 | 2-8 |
|---|---|---|---|---|---|---|---|
| Polylactic acid composition | Name | scPLA1 | scPLA12 | scPLA13 | scPLA2 | scPLA3 | scCPLA4 |
| Poly(L-lactic acid) type | Type | PLLA1 | PLLA1 | PLLA2 | PLLA1 | PLLA1 | PLLA1 |
| Poly(D-lactic acid) | | PDLA1 | PDLA1 | PDLA2 | PDLA1 | PDLA1 | PDLA1 |

(continued)

| Production Example | | 2-3 | 2-4 | 2-5 | 2-6 | 2-7 | 2-8 |
|---|---|---|---|---|---|---|---|
| Phosphoric acid metal salt | Type | - | - | - | NA-11 | NA - 71 | NA-71 |
| Carbodiimide (D) | Type | LA-1 | LA-1 | LA-1 | LA-1 | LA-1 | LA-1 |
| Crystal nucleating agent (F) | Type | - | - | - | - | F1 | F2 |
| Physical properties | | | | | | | |
| Weight average molecular weight (Mw) | ($\times 10^4$) | 14.6 | 14.6 | 14.6 | 14.5 | 14.5 | 14.6 |
| Lactide content | (wtppm) | 62 | 400 | 1550 | 61 | 62 | 60 |
| Carboxyl group concentration | (eq/ton) | 1 | 1 | 1 | 1 | 1 | 1 |
| Stereo crystal rate (S) | (%) | 56 | 56 | 56 | 100 | 100 | 100 |
| Stereo crystallization ratio (CR) | (%) | 35 | 35 | 35 | 65 | 70 | 70 |
| Melting point | (˚C) | 180/221 | 180/221 | 180/221 | 218 | 218 | 218 |
| Phosphoric acid metal salt (NA-11): Adecastab (registered trademark) NA-11 of ADEKA Corporation<br>Phosphoric acid metal salt (NA-71): Adecastab (registered trademark) NA-71 of ADEKA Corporation<br>Carbodiimide (LA-1): Carbodilite (registered trademark) LA-1 of Nisshinbo Industries, Inc.<br>Nucleating agent (F1): calcium silicate<br>Nucleating agent (F2): talc | | | | | | | |

Examples 1 to 8

The scPLA2, the scPLA3 and the scPLA4 obtained in Production Examples 2-6, 2-7 and 2-8 were used as the polylactic acid (component B). PBT resin (Juranex (registered trademark) 2002 of Wintec Polymer Cho., Ltd.) was used as the aromatic polyester (component A).

The components A and B were mixed together in a weight ratio shown in Table 3-1 and Table 3-2 and dried at 120˚C for 5 hours, and the resulting mixture was kneaded with 0.05 part by weight of an ester exchange inhibitor (component E) and 10 parts by weight of a modifier (component C) shown in Table 3-1 and Table 3-2 based on 100 parts by weight of the total of the components A and B by means of a double-screw kneader at a cylinder temperature of 250˚C and a feed rate of 2 kg/hr to obtain a resin composition pellet. The measurement results of the physical properties of the obtained resin compositions are shown in Table 3-1 and Table 3-2.

Each of the obtained pellets was injection molded at a mold temperature of 110 ˚C for a clamping time of 2 minutes to obtain a molded article. The obtained molded articles were white and had a good shape. The physical properties of the obtained molded articles are shown in Table 3-1 and Table 3-2.

Comparative Example 1

A resin composition was prepared and a molded article was produced therefrom in the same manner as in Example 1 except that the component C was not used. The results are shown in Table 3-2.

Comparative Example 2

A resin composition shown in Table 3-2 was prepared and a molded article was produced therefrom in the same manner as in Example 1 except that FDLA11 was used in place of scPLA2. The results are shown in Table 3-2.

Comparative Example 3

A resin composition shown in Table 3-2 was prepared and a molded article was produced therefrom in the same manner as in Example 1 except that the scPLA3 was not used. A satisfactory molded article could not be obtained when the clamping time of the mold was not 4 minutes. The results are shown in Table 3-2.

Table 3-1

| Production examples | | Ex.1 | Ex.2 | Ex.3 | Ex.4 | Ex. 5 | Ex.6 |
|---|---|---|---|---|---|---|---|
| Production conditions | | | | | | | |
| Polylactic acid (B) | Type | scPLA2 | scPLA2 | scPLA2 | scPLA2 | scPLA2 | scPLA2 |
| (A)/(B) ratio | Weight ratio | 40/60 | 36/70 | 10/90 | 30/70 | 30/70 | 30/70 |
| Modifier (C) | Type (Note 1) | C1 | C1 | C1 | C2 | C3 | C4 |
| | Weight (Note 2) | 10 | 10 | 10 | 10 | 10 | 10 |
| Ester exchange inhibitor (component E) | Type (Note 4) | E1 | E1 | E1 | E1 | E1 | E1 |
| | Weight (Note 5) | 0.05 | 0.05 | 0.05 | 0.05 | 0.05 | 0.05 |
| Physical properties of resin composition | | | | | | | |
| Biomass ratio | Calculation method (%) | 59 | 69 | 88 | 70 | 69 | 70 |
| Hydrolysis resistance | | ◎ | ◎ | ◎ | ◎ | ○ | ◎ |
| Melt stability | | ◎ | ◎ | ◎ | ◎ | ○ | ◎ |
| Carboxyl group concentration | eq/ton | Not more than 1 | Not more than 1 | Not more than 1 | Not more than 1 | Not more than 1 | Not more than 1 |
| Lactide content | (wtppm) | 37 | 40 | 37 | 35 | 40 | 34 |
| Stereo crystallization ratio (Cr) | (%) | 70 | 70 | 70 | 70 | 70 | 70 |
| Stereo crystal rate (S) | (%) | 100 | 100 | 100 | 100 | 100 | 100 |
| Physical properties of molded article | | | | | | | |
| Izod impact strength (Note 3) | $kJ/m^2$ | 3.8 | 5.5 | 5,6 | 5.8 | 5.3 | 5.5 |
| Flexural strength | MPa | 97 | 93 | 89 | 88 | 95 | 87 |
| Flexural modulus | GPa | 3.1 | 4.2 | 4.3 | 3.7 | 3.5 | 4.1 |

(continued)

| Production examples | | Ex.1 | Ex.2 | Ex.3 | Ex.4 | Ex. 5 | Ex.6 |
|---|---|---|---|---|---|---|---|
| Moisture absorptivity | wt% | 0.3 | 0.3 | 0.3 | 0.3 | 0.3 | 0.3 |
| Ex.: Example | | | | | | | |

Table 3-2

| Production examples | | Ex. 7 | Ex.8 | C.Ex.1 | C.Ex.2 | C.Ex.3 |
|---|---|---|---|---|---|---|
| Production conditions | | | | | | |
| Polylacticacid (B) | Type | scPLA3 | scPLA4 | scPLA2 | PDLA11 | - |
| (A)/(B) ratio | Weight ratio | 30/70 | 30/70 | 30/70 | 30/70 | 100 |
| Modifier (C) | Type (Note 1) | C5 | C6 | - | C1 | C1 |
| | Weight(Note 2) | 10 | 10 | - | 3 | 3 |
| Ester exchange inhibitor (component E) | Type (Note 4) | E1 | E1 | E1 | E1 | E1 |
| | Weight(Note 5) | 0.05 | 0.05 | 0.05 | 0.05 | 0.05 |
| Physical properties of resin composition | | | | | | |
| Biomass ratio | Calculation method (%) | 70 | 70 | 70 | 69 | 0 |
| Hydrolysis resistance | | ◎ | ◎ | ◎ | ○ | × |
| Melt stability | | ◎ | ◎ | ◎ | ○ | ○ |
| Carboxyl group concentration | eq/ton | Not more than 1 | Not more than 1 | Not more than 1 | Not more than 1 | Not more than 1 |
| Lactide content | (wtppm) | 35 | 35 | 35 | 40 | 0 |
| Stereo crystallization ratio (Cr) | (%) | 71 | 72 | 70 | 0 | 0 |
| Stereo crystal rate (S) | (%) | 100 | 100 | 100 | 0 | 0 |
| Physical properties of molded article | | | | | | |

(continued)

| Production examples | | Ex. 7 | Ex.8 | C.Ex.1 | C.Ex.2 | C.Ex.3 |
|---|---|---|---|---|---|---|
| Izod impact strength(Note 3) | kJ/m$^2$ | 6.1 | 5.4 | 1.3 | 3.6 | 3.5 |
| Flexural strength | MPa | 95 | 95 | 46 | 95 | 100 |
| Flexural modulus | GPa | 4.4 | 4.5 | 3.7 | 3.5 | 4.1 |
| Moisture absorptivity | wt% | 0.2 | 0.2 | 0.3 | 0.3 | 0.3 |

Ex.: Example C.Ex.: Comparative Example
Note 1
C1: Plamate D150 of Dainippon Ink and Chemicals, Inc.
C2: Metabrene (registered trademark) S2001 of Mitsubishi Rayon Co., Ltd.
C3: Metabrene (registered trademark) W-450A of Mitsubishi Rayon Co., Ltd.
C4: Ecoflex (registered trademark) SBX of BASF Japan Co., Ltd.
C5: Bond Fast (registered trademark) 7M of Sumitomo Chemical Co., Ltd.
C6: Biomax (registered trademark) Strong 100 of DuPont Co., Ltd.
Note 2: parts by weight based on 100 parts by weight of the total of components A and B
Note 3: notched Izod impact strength
Note 4: E1: acidic sodium metaphosphate of Rasa Kouei Co., Ltd.
Note 5: parts by weight based on 100 parts by weight of the total of components A and B

It is understood from Examples 1 to 8 that a resin composition comprising polylactic acid (component B) in which a stereocomplex phase is formed completely, PBT (component A) and a modifier (component C) and having an eco-friendly biomass ratio of not less than 50 %, a controlled lactide content and a controlled carboxyl group concentration has high Izod impact strength, proper stiffness, low moisture absorptivity, hydrolysis resistance stability, melt stability and high-speed moldability.

However, a resin composition which does not comprise the component C has an impact strength of only 1.3 kJ/m$^2$. The impact strength of a resin composition comprising polylactic acid forming no stereocomplex phase and a modifier (component C) is only 3.6 kJ/m$^2$.

Examples 9 to 14

The scPLA2, the scPLA1, the scPLA12 and the scPLA13 obtained in Production Examples 2-6, 2-3, 2-4 and 2-5 were used as the polylactic acid (component B). PBT resin (Juranex (registered trademark) 2002 of Wintec Polymer Co., Ltd.) was used as the aromatic polyester (component A).

The component A and the component B were mixed together in a weight ratio shown in Table 4, the resulting mixture was mixed with an ester exchange inhibitor (component E) and a modifier (component C) by setting the types and weight ratio of these substances as shown in Table 4, and the obtained mixture was dried at 120˚C for 5 hours and kneaded by means of a double-screw kneader at a cylinder temperature of 250˚C and a feed rate of 2 kg/hr to obtain a resin composition pellet. This pellet was injection molded at a mold temperature of 110˚C for a clamping time of 2 minutes to obtain a molded article. The obtained molded articles were white and had a good shape. The physical properties of the obtained molded articles are shown in Table 4.

Table 4

| Production examples | | Ex. 9 | Ex. 10 | Ex.11 | Ex.12 | Ex. 1.3 | Ex. 14 |
|---|---|---|---|---|---|---|---|
| Production conditions | | | | | | | |
| Polylacticacid (B) | Type | scPLA2 | scPLA2 | scPLA2 | scPLA1 | scPLA12 | scPLA13 |

(continued)

| Production examples | | Ex. 9 | Ex. 10 | Ex.11 | Ex.12 | Ex. 1.3 | Ex. 14 |
|---|---|---|---|---|---|---|---|
| (A)/(B) ratio | Weight ratio | 30/70 | 30/70 | 30/70 | 30/70 | 30/70 | 30/70 |
| Modifier (C) | Type (Note 1) | C3 | C3 | C3 | C3 | C3 | C3 |
| | Weight (Note 2) | 7 | 15 | 20 | 7 | 15 | 20 |
| Ester exchange inhibitor (component E) | Type (Note 4) | E2 | E2 | E2 | E2 | E2 | E2 |
| | Weight (Note 5) | 0.05 | 0.05 | 0.05 | 0.05 | 0.05 | 0.05 |
| Physical properties of resin composition | | | | | | | |
| Biomass ratio | Calculation method (%) | 65 | 62 | 56 | 62 | 62 | 62 |
| Hydrolysis resistance | | ◎ | ◎ | ◎ | ○ | ○ | ○ |
| Melt stability | | ◎ | ◎ | ◎ | ○ | ○ | ○ |
| Carboxyl group concentration | eq/ton | Not more than 1 | Not more than 1 | Not more than 1 | Not more than 1 | Not more than 1 | Not more than 1 |
| Lactide content | (wtppm) | 40 | 40 | 35 | 42 | 280 | 1000 |
| Stereo crystallization ratio (Cr) | (%) | 70 | 70 | 70 | 70 | 65 | 65 |
| Stereo crystal rate (S) | (%) | 100 | 100 | 100 | 41 | 40 | 40 |
| Physical properties of molded article | | | | | | | |
| Izod impact strength (Note 3) | $kJ/m^2$ | 3.7 | 5.5 | 5.6 | 3.6 | 5.1 | 5.1 |
| Flexural strength | MPa | 95 | 93 | 85 | 93 | 85 | 88 |
| Flexural modulus | GPa | 4.3 | 4.2 | 4 | 4.1 | 3.8 | 3.7 |

(continued)

| Production examples | | Ex. 9 | Ex. 10 | Ex.11 | Ex.12 | Ex. 1.3 | Ex. 14 |
|---|---|---|---|---|---|---|---|
| Moisture absorptivity | wt% | 0.3 | 0.3 | 0.3 | 0.3 | 0.5 | 0.7 |
| Ex.: Example<br>Note 1:<br>C3: Metabrene (registered trademark) W-450A of Mitsubishi Rayon Co., Ltd.<br>Note 2: parts by weight based on 100 parts by weight of the total of components A and B<br>Note 3: notched Izod impact strength<br>Note 4: E2: synthesized dihexylphosphonoethyl acetate<br>Note 5: parts by weight based on 100 parts by weight of the total of components A and B | | | | | | | |

The obtained molded articles had a high Izod impact strength of 5.5 kJ/m$^2$ when 15 parts by weight of the modifier (component C) was used.

Examples 15 to 20

The scPLA2, the scPLA3, the scPLA4 and the scPLA5 obtained in Production Examples 2-6, 2-7, 2-8 and 2-9 were used as the polylactic acid (component B). Juranex (registered trademark) 2000 of Wintec Polymer Co., Ltd. was used as the PBT resin (component A). The component A and the component B were mixed together in a weight ratio shown in Table 5 and dried at 120˚C for 5 hours, and the resulting mixture was kneaded with 0.05 part by weight of an ester exchange inhibitor (component E) and 12 parts by weight of a polyamide elastomer (component C: TPAE) (TPAE-32 of Fuji Kasei Kogyo Co., Ltd.) based on 100 parts by weight of the total of the components A and B by means of a double-screw kneader at a cylinder temperature of 250˚C and a feed rate of 2 kg/hr to obtain a resin composition. The physical properties of the obtained resin composition are shown in Table 5. The obtained resin composition was infection molded at a mold temperature of 110˚C for a clamping time of 2 minutes to obtain a molded article. The obtained molded articles were white and had a good shape. The physical properties of the obtained molded articles are shown in Table 5.

It is undsrstood front the above Examples that the resin composition of the present invention has high Izod impact strength, hydrolysis resistance, melt stability and high-speed moldability. However, the resin composition containing no component C has an impact strength of only 1.3 kJ/m$^2$. The impact strength of a resin composition comprising polylactic acid forming no stereocomplex phase and TPAE is only about 3.6 kJ/m$^2$.

Table 5

| Production examples | | Ex. 15 | Ex. 16 | Ex. 17 | Ex. 18 | Ex. 19 | Ex. 20 |
|---|---|---|---|---|---|---|---|
| Production conditions | | | | | | | |
| Polylacticacid (B) | Type | scPLA2 | scPLA2 | scPLA2 | scPLA3 | scPLA4 | scPLA5 |
| (A)/(B) ratio | Weight ratio | 40/66 | 30/70 | 10/90 | 30/70 | 30/70 | 30/70 |
| Polyamide elastomer (component C) | Type (Note 1) | C32 | C32 | C32 | C32 | C32 | C32 |
| | Weight (Note 2) | 3 | 3 | 3 | 3 | 3 | 3 |
| Ester exchange inhibitor (component E) | Type Note 4) | E1 | E1 | E1 | E1 | E1. | E1 |
| | Weight (Note 5) | 0.05 | 0.05 | 0.05 | 0.05 | 0.05 | 0.05 |

(continued)

| Production examples | | Ex. 15 | Ex. 16 | Ex. 17 | Ex. 18 | Ex. 19 | Ex. 20 |
|---|---|---|---|---|---|---|---|
| Physical properties of resin composition | | | | | | | |
| Biomass ratio | Calculation method (%) | 59 | 69 | 88 | 69 | 69 | 69 |
| Hydrolysis resistance | | ◎ | ◎ | ◎ | ◎ | ◎ | ◎ |
| Melt stability | | ◎ | ◎ | ◎ | ◎ | ◎ | ◎ |
| Carboxyl group concentration | eq/ton | Not more than 1 | Not more than 1 | Not more than 1 | Not more than 1 | Not more than 1 | Not more than 1 |
| Lactide content | (wtppm) | 37 | 40 | 37 | 40 | 40 | 40 |
| Stereo crystallization ratio (Cr) | (%) | 70 | 70 | 70 | 70 | 70 | 70 |
| Stereo crystal rate (S) | (%) | 100 | 100 | 100 | 100 | 100 | 100 |
| Physical properties of molded article | | | | | | | |
| Izod impact strength (Note 3) | $kJ/m^2$ | 5.1 | 7.1 | 7.1 | 7.1 | 7.1 | 7.1 |
| Flexural strength | MPa | 100 | 93 | 90 | 93 | 95 | 95 |
| Flexural modulus | GPa | 3.1 | 4.0 | 4.1 | 3.9 | 3.7 | 4.3 |

Ex.: Example
Note 1: C32: TPAE-32 of Fuji Kasei Kogyo Co., Ltd.
Note 2: parts by weight based on 100 parts by weight of the total of components A and B
Note 3: notched Izod impact strength
Note 4: E1: acidic sodium metaphosphate of Rasa Kouei Co., Ltd.
Note 5: parts by weight based on 100 parts by weight of the total of components A and B

Example 21 to 25

The types and weight ratio of the scPLA2 (component B) obtained in Production Example 2-6, PBT resin (Juranex (registered trademark) 2000 of Wintec Polymer Co., Ltd.) (component A) , an ester exchange inhibitor (component E) and a polyamide elastomer (component C) (of Fuji Kasei Kogyo Co., Ltd.) were changed as shown in Table 6, and these components were dried at 120˚C for 5 hours and were kneaded with an ester exchange inhibitor (component E) by means of a double-screw kneader at a cylinder temperature of 250˚C and a feed rate of 2 kg/hr to obtain a resin composition pellet. Then, this pellet was injection molded at a mold temperature of 110˚C for a clamping time of 2 minutes to obtain a molded article. The physical properties of the obtained resin compositions and the molded articles are shown in Table 6. The molded articles were white and had a good shape.

Table 6

| Production examples | | Ex. 21 | Ex. 22 | Ex. 23 | Ex. 24 | Ex. 25 |
|---|---|---|---|---|---|---|
| Production conditions | | | | | | |
| Polylactic acid (B) | Type | scPLA2 | scPLA2 | scPLA2 | scPLA2 | scPLA2 |
| (A)/(B) ratio | Weight ratio | 30/70 | 30/70 | 30/70 | 30/70 | 30/70 |
| TPAE (component C) | Type (Note 1) | C32 | C32 | C32 | C31 | C38 |
| | Weight (Note 2) | 1 | 5 | 10 | 3 | 3 |
| Ester exchange inhibitor (component E) | Type (Note 4) | E2 | E2 | E2 | E2 | E2 |
| | Weight (Note 5) | 0.05 | 0.05 | 0.05 | 0.05 | 0.05 |
| Physical properties of resin composition | | | | | | |
| Biomass ratio | Calculation method (%) | 65 | 62 | 56 | 62 | 62 |
| Hydrolysis resistance | | ◎ | ◎ | ◎ | ◎ | ◎ |
| Melt stability | | ◎ | ◎ | ◎ | ◎ | ◎ |
| Carboxyl group concentration | eq/ton | Not more than 1 | Not more than 1 | Not more than 1 | Not more than 1 | Not more than 1 |
| Lactide content | (wtppm) | 40 | 40 | 35 | 40 | 40 |
| Stereo crystallization ratio (Cr) | (%) | 70 | 70 | 70 | 70 | 70 |
| Stereo crystal rate (S) | (%) | 90 | 100 | 90 | 100 | 100 |
| Physical properties of molded article | | | | | | |
| Izod impact strength (Note 3) | $kJ/m^2$ | 4.3 | 7.2 | 8.3 | 6.6 | 6.5 |
| Flexural strength | MPa | 95 | 93 | 85 | 93 | 93 |

(continued)

| Production examples | | Ex. 21 | Ex. 22 | Ex. 23 | Ex. 24 | Ex. 25 |
|---|---|---|---|---|---|---|
| Flexural modulus | GPa | 3.5 | 2.9 | 2.7 | 4.1 | 4.2 |

Ex.: Example
Note 1:
C32; TPAE-32 of Fuji Kasei Kogyo Co., Ltd.
C32; TPAE-31 of Fuji Kasei Kogyo Co., Ltd.
C38; TPAE-38 of Fuji Kasei Kogyo Co., Ltd.
Note 2: parts by weight based on long parts by weight of the total of components A and B
Note 3: notched Izod impact strength
Note 4: E2; synthesized dihexylphosphonoethyl acetate
Note 5: parts by weight based on 100 parts by weight of the total of components A and B

The molded articles had a high Izod impact strength of 8.3 kJ/m$^2$ when 10 parts by weight of the polyamide elastomer (component C) was used. When the polyamide elastomer (component C) was changed to TPAE-31 and TPAE-38, the same impact strength as that of TPAE-32 was obtained.

Examples 26 to 28

Compositions and molded articles thereof were produced in the same manner as in Example 16 except that the scPLA2 in Example 16 was changed to the scPLA1, the scPLA12 and the scPLA13 produced in Production Examples 2-3, 2-4 and 2-5 and having a lower stereo crystal rate and a higher lactide content than those of the scPLA2. Although the molded articles had a high impact strength of 6.4 to 7 kJ/m$^2$, their hydrolysis resistance and melt stability were acceptable but lower than those of Example 16.

Table 7

| Production examples | | Ex. 26 | Ex. 27 | Ex. 28 |
|---|---|---|---|---|
| Production conditions | Production conditions | | | |
| Polylactic acid (B) | Type | scPLA1 | scPLA12 | scPLA13 |
| (A)/(B) ratio | Weight ratio | 30/70 | 30/70 | 30/70 |
| polyamide elastomer (component C) | Type (Note 1) | C32 | C32 | C32 |
| | Weight (Note 2) | 3 | 3 | 3 |
| Ester exchange inhibitor (component E) | Type (Note 4) | E2 | E2 | E2 |
| | Weight (Note 5) | 0.05 | 0.05 | 0.05 |
| Physical properties of resin composition | | | | |
| Biomass ratio | Calculation method (%) | 62 | 62 | 62 |
| Hydrolysis resistance | | ○ | ○ | ○ |
| Melt stability | | ○ | ○ | ○ |
| Carboxyl group concentration | eq/ton | Not more than 1 | Not more than 1 | Not more than 1 |
| Lactide content | (wtppm) | 42 | 280 | 1000 |
| Stereo crystallization ratio (Cr) | (%) | 70 | 65 | 65 |
| Stereo crystal rate (S) | (%) | 41 | 40 | 40 |
| Physical properties of molded article | | | | |
| Izod impact strength (Note 3) | kJ/m$^2$ | 7 | 6.5 | 6.4 |

(continued)

| Production examples | | Ex. 26 | Ex. 27 | Ex. 28 |
|---|---|---|---|---|
| Flexural strength | MPa | 93 | 85 | 88 |
| Flexural modulus | GPa | 4.1 | 3.8 | 3.7 |

Ex.: Example
Note 1: C32; TPAE-32 of Fuji Kasei Kogyo Co., Ltd.
Note 2: parts by weight based on 100 parts by weight of the total of components A and B
Note 3: notched Izod impact strength
Note 4: E2; synthesized dihexylphosphonoethyl acetate
Note 5: parts by weight based on 100 parts by weight of the total of components A and B

Effect of the Invention

The resin composition of the present invention provides a molded article having excellent impact resistance and stiffness. The resin composition of the present invention has a biomass ratio of not less than 50 %. The resin composition of the present invention has low moisture absorptivity and excellent hydrolysis resistance. The resin, composition of the present invention provides a molded article having excellent heat resistance. The resin composition of the present invention has high-speed moldability.

## Claims

1. A resin composition comprising an aromatic polyester having a butylene terephthalate skeleton as the main constituent unit (component A), polylactic acid comprising poly(L-lactic acid) and poly(D-lactic acid) (component B), and a modifier (component C), wherein
the resin composition has (i) a crystal melting peak of stereocomplex-phase polylactic acid at 190°C or higher in differential scanning calorimeter measurement, (ii) a biomass ratio of not less than 50 %, (iii) a notched Izod impact strength of 4 to 15 kJ/$m^2$ and (iv) a flexural modulus of 2.5 to 6 GPa.

2. The resin composition according to claim 1 which has a stereo crystallization ratio (Cr) of not less than 50 % and a stereo crystal rate (S) of not less than 80 % (the stereo crystallization ratio (Cr) is represented by the following equation (1):

$$Cr\ (\%) = [\Sigma I_{SCi}/(\Sigma I_{SCi} + I_{HM})] \times 100 \qquad (1)$$

$$\Sigma I_{SCi} = I_{SC1} + I_{SC2} + I_{SC3}$$

($I_{SCi}$ (i = 1 to 3) is the integral intensity of a diffraction peak at 2θ = 12.0°, 20.7° or 24.0°, $\Sigma I_{SCi}$ is the total of integral intensities of diffraction peaks derived from a stereocomplex crystal, and $I_{HM}$ is the integral intensity of a diffraction peak derived from a homocrystal in wide-angle X-ray diffraction (XRD) measurement), and the stereo crystal rate (S) is represented by the following equation (2) from the melting enthalpy of a polylactic acid crystal in DSC measurement:

$$S\ (\%) = [(\Delta Hms/\Delta Hms^0)/(\Delta Hmh/\Delta Hmh^0 + \Delta Hms/\Delta Hms^0)] \times 100 \quad (2)$$

($\Delta Hms^0$ = 203.4 J/g, $\Delta Hmh^0$ = 142 J/g, ΔHms = melting enthalpy of a stereocomplex-phase polylactic acid crystal, and ΔHmh = melting enthalpy of a polylactic acid homo-phase crystal)).

3. The resin composition according to claim 2 which has a stereo crystallization ratio (Cr) of not less than 50 % and a stereo crystal rate (S) of not less than 95 %.

4. The resin composition according to claim 1, wherein the modifier (component C) is at least one resin selected from the group consisting of copolyester, copolyethylene and core-shell type resin having silicone/acrylic or acrylic rubber and is contained in an amount of 1 to 30 parts by weight based on 100 parts by weight of the total of the components A and B.

5. The resin composition according to claim 4 which comprises 50 parts or more by weight and less than 100 parts by weight of the component B and 1 to 30 parts by weight of the component C based on 100 parts by weight of the total of the components A and B.

6. The resin composition according to claim 4 which has a carbodiimide compound (component D) content of 0.001 to 5 wt% based on the total of the components A, Band C, a lactide content of 0 to 700 wtppm and a carboxyl group concentration of 0 to 30 eg/ton.

7. The resin composition according to claim 4 which has a notched Izod impact strength of 4 to 7.5 $kJ/m^2$.

8. The resin composition according to claim 4 which has a moisture absorptivity of less than 1 wt%.

9. The resin composition according to claim 1, wherein the modifier (component C) is a polyamide elastomer.

10. The resin composition according to claim 9 which has a component B content of 50 parts or more by weight and less than 100 parts by weight and a component C content of 0.1 to 10 parts by weight based on 100 parts by weight of the total of the components A and B.

11. The resin composition according to claim 9 which has a carbodiimide compound (component D) content of 0.001 to 5 wt%, a lactide content of 0 to 700 wtppm and a carboxyl group concentration of 0 to 30 eq/ton based on the total of the components A, B and C.

12. The resin composition according to claim 1, wherein the aromatic polyester (component A) has a carboxyl group concentration of 0 to 60 eq/ton and an intrinsic viscosity of 0.7 to 1.8.

13. The resin composition according to claim 1, wherein the polylactic acid (component B) has a stereo crystallization ratio (Cr) of not less than 50 % and a stereo crystal rate (S) of not less than 80 %.

14. The resin composition according to claim 1, wherein the polylactic acid (component B) contains 0.001 to 5 wt% of a carbodiimide compound (component D) and has a carboxyl group concentration of not more than 10 eq/ton and a lactide content of 0 to 700 wtppm.

15. The resin composition according to claim 1 which comprises 0.01 to 5 parts by weight of an ester exchange inhibitor (component E) based on 100 parts by weight of the total of the components A and B.

16. The resin composition according to claim 1 which comprises 0.01 to 10 parts by weight of a crystal nucleating agent (component F) based on 100 parts by weight of the total of the components A and B.

17. A molded article obtained from the resin composition of claim 1.

**INTERNATIONAL SEARCH REPORT**

International application No.
PCT/JP2009/052122

A. CLASSIFICATION OF SUBJECT MATTER
*C08L67/04*(2006.01)i, *C08K3/32*(2006.01)i, *C08K5/29*(2006.01)i, *C08K5/3415* (2006.01)i, *C08L67/02*(2006.01)i, *C08L77/00*(2006.01)i, *C08L101/16* (2006.01)n

According to International Patent Classification (IPC) or to both national classification and IPC

B. FIELDS SEARCHED

Minimum documentation searched (classification system followed by classification symbols)
C08L67/00-67/04, C08K3/32, C08K5/29

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2007-246694 A (Riken Technos Corp.), 27 September, 2007 (27.09.07), Claims 1 to 4, 7; Par. Nos. [0008], [0012], [0021] to [0024], [0033] to [0042]; tables 1 to 3 (Family: none) | 1-17 |
| A | JP 2007-246693 A (Riken Technos Corp.), 27 September, 2007 (27.09.07), Claims 2, 4, 5; Par. Nos. [0009], [0018], [0020] to [0023], [0025], [0027] to [0032], [0034]; tables 1, 2 (Family: none) | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 May, 2009 (01.05.09) | 19 May, 2009 (19.05.09) |
| Name and mailing address of the ISA/ Japanese Patent Office | Authorized officer |
| Facsimile No. | Telephone No. |

Form PCT/ISA/210 (second sheet) (April 2007)

INTERNATIONAL SEARCH REPORT

International application No. PCT/JP2009/052122

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-298797 A (Asahi Kasei Chemicals Corp.), 27 October, 2005 (27.10.05), Claims 1 to 8, 13 to 26; Par. Nos. [0011], [0016], [0020], [0083], [0084]; table 7 & US 2005/0154148 A1 | 1-17 |
| A | JP 2007-231051 A (Toray Industries, Inc.), 13 September, 2007 (13.09.07), Claims 1 to 10; Par. Nos. [0009], [0019], [0031], [0032], [0047] to [0050], [0054], [0055], [0060], [0061], [0065]; table 5 (Family: none) | 1-17 |
| A | JP 2007-234260 A (Toray Industries, Inc.), 13 September, 2007 (13.09.07), Claims 1 to 8; Par. Nos. [0010], [0015], [0019], [0020], [0031] to [0033], [0060], [0079] to [0082], [0087]; table 4 (Family: none) | 1-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8104797 A
- JP 2006036818 A
- JP 2003342459 A
- JP 320336 A
- JP 5320336 A


### Non-patent literature cited in the description


- *Macromolecules,* 1987, vol. 20, 904-906